(19) Europäisches Patentamt

European Patent Office

Office européen des brevets

(11) **EP 4 546 916 A1**

(12) **EUROPEAN PATENT APPLICATION**
published in accordance with Art. 153(4) EPC

(43) Date of publication:
**30.04.2025  Bulletin 2025/18**

(21) Application number: **23844988.8**

(22) Date of filing: **15.05.2023**

(51) International Patent Classification (IPC):
***H04W 72/04*** (2023.01)

(52) Cooperative Patent Classification (CPC):
**H04W 72/04; H04W 72/23**

(86) International application number:
**PCT/CN2023/094157**

(87) International publication number:
**WO 2024/021773 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022  CN 202210897038**

(71) Applicant: **Huawei Technologies Co., Ltd.**
**Shenzhen, Guangdong 518129 (CN)**

(72) Inventors:
• **MA, Chuan**
**Shenzhen, Guangdong 518129 (CN)**
• **JIN, Yinghao**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD, AND APPARATUS**

(57)    This application discloses a communication method and apparatus. The method includes: A first network device generates common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a first parameter in the first information element includes a physical cell identifier of the first cell, and the first parameter in the second information element includes a physical cell identifier of the second cell. Therefore, in a scenario in which co-coverage is provided for a plurality of cells, the common system information is used by a terminal device to determine system information of a target cell, so that total resource overheads of the system information can be effectively reduced.

FIG. 4

**Description**

CROSS-REFERENCE TO RELATED APPLICATIONS

This application claims priority to Chinese Patent Application No. 202210897038.8, filed with the China National Intellectual Property Administration on July 28, 2022 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In some reliability scenarios (for example, high-speed railways and workshops), a "multi-guarantee" manner is usually used for networking, that is, a plurality of cells are deployed in an area. In this way, when a fault occurs in one of the cells, the other cells can still provide services for users in the area. This networking manner can greatly reduce a probability of network interruption and improve network robustness.

An available spectrum of a network is usually fixed. When the network is deployed in the foregoing manner, a plurality of co-coverage cells need to share a same spectrum, and common signals of these cells may coexist in a frequency division manner, a time division manner, or the like. In the foregoing scenario, because the plurality of cells share the same spectrum, and each cell has one independent common signal, total time-frequency resources occupied by the common signals proportionally increase, and consequently, time-frequency resources that can be used for service transmission are greatly reduced. Therefore, to improve a service capacity of a system, resource overheads of the common signals need to be reduced. In the common signals, a system information block 1 (system information block 1, SIB 1) occupies the most resources compared with other information. Therefore, reducing resource overheads of the SIB 1 is a key to reducing the resource overheads of the common signals.

Therefore, a communication method urgently needs to be provided, so that in a scenario in which co-coverage is provided for a plurality of cells, total resource overheads of system information can be effectively reduced.

SUMMARY

A communication method and apparatus are provided, so that in a scenario in which co-coverage is provided for a plurality of cells, total resource overheads of system information can be effectively reduced.

According to a first aspect, this application provides a communication method. The method may be performed by a first network device, or may be performed by a component (for example, a processor, a chip, or a chip system) of the first network device. This is not specifically limited in this application. The method may specifically include the following steps: The first network device generates common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The first network device sends the common system information.

In the solution of this application, the first network device generates the common system information. The common system information includes the plurality of information elements, the plurality of information elements include the first information element and the second information element, the first information element includes the values of the plurality of parameters in the system information of the first cell, and the second information element includes the value of the first parameter in the system information of the second cell. The value of the second parameter in the system information of the second cell is the same as the value of the second parameter in the system information of the first cell, and the first parameter and the second parameter constitute the plurality of parameters. The value of the physical cell identifier included in the first parameter in the first information element is the physical cell identifier of the first cell, and the value of the physical cell identifier included in the first parameter in the second information element is the physical cell identifier of the second cell. The first network device sends the common system information. Therefore, it can be learned that in a scenario in which co-coverage is provided for a plurality of cells (for example, the first cell and the second cell), a terminal device may flexibly determine system information of a target cell (the first cell or the second cell) based on the common system information, so that the target cell can be effectively accessed to implement communication. In addition, because the value of the second parameter in the first information element may also be used as the value of the second parameter in the system information of the second cell, the value of the second parameter in the system information of the second cell does not need to be additionally added to the second information element in the system information, so that resources of the second information element in the common system information can be saved, and further, total resource overheads of the system information can be reduced.

In a possible implementation, the method further includes: The first network device sends first information. The first information indicates a common physical cell identifier. That the first network device sends the common system information includes: The first network device determines a scrambling sequence based on the common physical cell identifier; the first network device scrambles the common system information by using the scrambling sequence; and the first network device sends the scrambled common system information.

In this implementation, before sending the common system information, the first network device further needs to determine the scrambling sequence based on the common physical cell identifier, scramble the common system information by using the scrambling sequence, and then send the scrambled common system information, to ensure transmission security of the common system information. In addition, the first network device further sends (broadcasts) the first information, where the first information indicates the common physical cell identifier, so that the terminal device at a receive end can obtain the common physical cell identifier, and can successfully descramble the scrambled common system information from the first network device by using the common physical cell identifier, thereby effectively obtaining the common system information.

In a possible implementation, the first information includes the common physical cell identifier or a difference between the common physical cell identifier and a physical cell identifier of a cell managed by the first network device.

In this implementation, the first network device may flexibly indicate the common physical cell identifier by using the first information.

In a possible implementation, the method further includes: The first network device sends a first synchronization signal block. The first synchronization signal block includes the physical cell identifier of the cell managed by the first network device.

In this implementation, if the first information sent by the first network device includes the difference between the common physical cell identifier and the physical cell identifier of the cell managed by the first network device, the first network device further sends, by broadcasting a first synchronization signal, the physical cell identifier of the cell managed by the first network device, so that the terminal device within a broadcast range effectively obtains the common physical cell identifier.

According to a second aspect, this application provides a communication method. The method may be performed by a terminal device, or may be performed by a component (for example, a processor, a chip, or a chip system) of the terminal device. This is not specifically limited in this application. The method may specifically include the following steps: The terminal device receives common system information from a first network device. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The terminal device determines system information of a target cell based on the common system information.

In the solution of this application, the terminal device receives the common system information from the first network device. The common system information includes the plurality of information elements, the plurality of information elements include the first information element and the second information element, the first information element includes the values of the plurality of parameters in the system information of the first cell, and the second information element includes the value of the first parameter in the system information of the second cell. The value of the second parameter in the system information of the second cell is the same as the value of the second parameter in the system information of the first cell, and the first parameter and the second parameter constitute the plurality of parameters; and the value of the physical cell identifier included in the first parameter in the first information element is the physical cell identifier of the first cell, and the value of the physical cell identifier included in the first parameter in the second information element is the physical cell identifier of the second cell. The terminal device determines the system information of the target cell based on the common system information. Therefore, it can be learned that in a scenario in which co-coverage is provided for a plurality of cells (for example, the first cell and the second cell), the terminal device may flexibly determine the system information of the target cell (the first cell or the second cell) based on the common system information, so that the target cell can be effectively accessed to implement communication. In addition, because the value of the second parameter in the first information element may also be used as the value of the second parameter in the system information of the second cell, the value of the second parameter in the system information of the second cell does not need to be additionally added to the second information element in the system information, so that resources of the second information element in the common system information can be saved, and further, total resource overheads of the system information can be reduced.

In a possible implementation, the method further includes: The terminal device receives first information from the first network device. The first information indicates a common physical cell identifier. That the terminal device receives common system information from a first network device includes: The terminal device receives a signal from the first network device; the terminal device determines a descrambling sequence based on the common physical cell identifier indicated by the first information; and the terminal device descrambles the signal by using the descrambling sequence, to obtain the common system information.

In this implementation, the terminal device further receives the first information from the first network device. The first information indicates the common physical cell identifier. Therefore, the terminal device may determine the descrambling sequence by using the common physical cell identifier, and may successfully descramble the signal from the first network device by using the descrambling sequence, to effectively obtain the common system information.

In a possible implementation, the first information includes the common physical cell identifier or a difference between the common physical cell identifier and a physical cell identifier of a cell managed by the first network device. When the first information includes the difference between the common physical cell identifier and the physical cell identifier of the cell managed by the first network device, before the terminal device determines the descrambling sequence based on the common physical cell identifier indicated by the first information, the method further includes: The terminal device receives a first synchronization signal block from the first network device. The first synchronization signal block includes the physical cell identifier of the cell managed by the first network device. The terminal device determines the common physical cell identifier based on the physical cell identifier of the cell managed by the first network device and the difference, in the first information, between the common physical cell identifier and the physical cell identifier of the cell managed by the first network device.

In this implementation, the first network device may flexibly indicate the common physical cell identifier by using the first information, to ensure that the terminal device can accurately obtain the common physical cell identifier.

In a possible implementation, that the terminal device determines system information of a target cell based on the common system information includes: The terminal device receives a second synchronization signal block from a second network device. The second synchronization signal block includes a physical cell identifier of the target cell managed by the second network device. The terminal device determines the system information of the target cell from the common system information based on the physical cell identifier of the target cell.

In this implementation, the terminal device receives the second synchronization signal block broadcast by the second network device, and effectively obtains, from the second synchronization signal block, the physical cell identifier of the target cell managed by the second network device. Further, the terminal device accurately determines the system information of the target cell from the common system information based on the physical cell identifier of the target cell, to successfully access the target cell and implement communication.

In a possible implementation, that the terminal device determines the system information of the target cell from the common system information based on the physical cell identifier of the target cell includes: When the physical cell identifier of the target cell is the physical cell identifier of the first cell, the terminal device obtains the first information element including the physical cell identifier of the first cell from the common system information; and the terminal device uses, as the system information of the target cell, the values of the plurality of parameters included in the first information element; or when the physical cell identifier of the target cell is the physical cell identifier of the second cell, the terminal device obtains the second information element including the physical cell identifier of the second cell from the common system information; obtains the values of the plurality of parameters in the first information element from the common system information; replaces a value of the first parameter in the plurality of parameters with the value of the first parameter in the second information element, to obtain updated values of the plurality of parameters; and uses the updated values of the plurality of parameters as the system information of the target cell.

In this implementation, the terminal device may flexibly determine the system information of the target cell from the common system information depending on whether the physical cell identifier of the target cell is the physical cell identifier of the first cell or the physical cell identifier of the second cell. If the target cell is the first cell, the terminal device may directly use the values of the plurality of parameters in the first information element in the common system information as the system information of the target cell. If the target cell is the second cell, the terminal device may replace the value of the first parameter in the plurality of parameters with the value of the first parameter in the second information element, and use, as the system information of the target cell, the values that are of the plurality of parameters and that are obtained through replacement. It can be learned that, in the solution of this application, the terminal device may flexibly determine the system information of the target cell, to effectively access the target cell to implement communication. In addition, because the value of the second parameter in the first information element is the same as the value of the second parameter in the system information of the second cell, the value of the second parameter in the first information element may also be used as the value of the second parameter in the system information of the second cell, the value of the second parameter in the system information of the second cell does not need to be additionally added to the second information element, so that resources of the second information element in the common system information can be saved, and further, total resource overheads of the system information can be reduced.

According to a third aspect, an embodiment of this application further provides a communication apparatus. The communication apparatus may be used in a first network device in the first aspect, an apparatus (for example, a chip, a chip system, or a circuit) in the first network device, or an apparatus that can be used together with the first network device.

In a possible implementation, the communication apparatus may include modules or units that one-to-one correspond to the methods/operations/steps/actions described in the first aspect. The module or unit may be implemented by a hardware circuit, software, or a combination of a hardware circuit and software. In a possible implementation, the communication apparatus may include a processing module and a transceiver module. The processing module is configured to invoke the transceiver module to perform a receiving function and/or a sending function.

In a possible implementation, the communication apparatus includes a transceiver unit and a processing unit. The processing unit is configured to generate common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The transceiver unit is configured to send the common system information.

In a possible implementation, the transceiver unit is further configured to send first information. The first information indicates a common physical cell identifier. When sending the common system information, the transceiver unit is specifically configured to: determine a scrambling sequence based on the common physical cell identifier by using the processing unit; and scramble the common system information by using the processing unit and the scrambling sequence; and send the scrambled common system information.

In a possible implementation, the first information includes the common physical cell identifier or a difference between the common physical cell identifier and a physical cell identifier of a cell managed by the first network device.

In a possible implementation, the transceiver unit is further configured to send a first synchronization signal block. The first synchronization signal block includes the physical cell identifier of the cell managed by the first network device.

According to a fourth aspect, an embodiment of this application further provides a communication apparatus. The communication apparatus may be used in the terminal device in the second aspect. The communication apparatus may be a terminal device, an apparatus (for example, a chip, a chip system, or a circuit) in the terminal device, or an apparatus that can be used together with the terminal device.

In a possible implementation, the communication apparatus may include modules or units that one-to-one correspond to the methods/operations/steps/actions described in the second aspect. The module or unit may be implemented by a hardware circuit, software, or a combination of a hardware circuit and software. In a possible implementation, the communication apparatus may include a processing module and a transceiver module. The processing module is configured to invoke the transceiver module to perform a receiving function and/or a sending function.

In a possible implementation, the communication apparatus includes a transceiver unit and a processing unit. The transceiver unit is configured to receive common system information from a first network device. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The processing unit is configured to determine system information of a target cell based on the common system information.

In a possible implementation, the transceiver unit is further configured to receive first information from the first network device. The first information indicates a common physical cell identifier. When receiving the common system information from the first network device, the transceiver unit is specifically configured to: receive a signal from the first network device; determine a descrambling sequence based on the common physical cell identifier indicated by the first information and by using the processing unit; and descramble the signal by using the processing unit and the descrambling sequence, to obtain the common system information.

In a possible implementation, the first information includes the common physical cell identifier or a difference between the common physical cell identifier and a physical cell identifier of a cell managed by the first network device. When the first information includes the difference between the common physical cell identifier and the physical cell identifier of the cell managed by the first network device, the processing unit is further configured to: before the descrambling sequence is determined based on the common physical cell identifier indicated by the first information, receive a first synchronization signal block from the first network device through the transceiver unit, where the first synchronization signal block includes the physical cell identifier of the cell managed by the first network device; and determine the common physical cell identifier based on the physical cell identifier of the cell managed by the first network device and the difference, in the first information, between the common physical cell identifier and the physical cell identifier of the cell managed by the first network device.

In a possible implementation, when determining the system information of the target cell based on the common system information, the processing unit is specifically configured to: receive a second synchronization signal block from a second network device through the transceiver unit, where the second synchronization signal block includes a physical cell identifier of the target cell managed by the second network device; and determine the system information of the target cell from the common system information based on the physical cell identifier of the target cell.

In a possible implementation, when determining the system information of the target cell from the common system information based on the physical cell identifier of the target cell, the processing unit is specifically configured to: when the physical cell identifier of the target cell is the physical cell identifier of the first cell, obtain the first information element including the physical cell identifier of the first cell from the common system information; and use, as the system information of the target cell, the values of the plurality of parameters included in the first information element; or when the physical cell identifier of the target cell is the physical cell identifier of the second cell, obtain the second information element including the physical cell identifier of the second cell from the common system information; obtain the values of the plurality of parameters in the first information element from the common system information; replace a value of the first parameter in the plurality of parameters with the value of the first parameter in the second information element, to obtain updated values of the plurality of parameters; and use the updated values of the plurality of parameters as the system information of the target cell.

According to a fifth aspect, an embodiment of this application provides a communication apparatus. The communication apparatus includes at least one processor and an interface circuit. The interface circuit is configured to input a program or instructions into and/or output a program or instructions from the at least one processor. The at least one processor is configured to execute the program or the instructions, so that the communication apparatus can implement the method provided in any one of the first aspect or the possible implementations of the first aspect; or the at least one processor is configured to execute the program or the instructions, so that the communication apparatus can implement the method provided in any one of the second aspect or the possible implementations of the second aspect.

According to a sixth aspect, this application provides a communication system, including a network device configured to perform the method provided in any one of the first aspect or the possible implementations of the first aspect and a terminal device configured to perform the method provided in any one of the second aspect or the possible implementations of the second aspect.

According to a seventh aspect, an embodiment of this application provides a computer storage medium. The storage medium stores a software program, and when the software program is read and executed by one or more processors, the method provided in any one of the first aspect or the possible implementations of the first aspect may be implemented, or the method provided in any one of the second aspect or the possible implementations of the second aspect may be implemented.

According to an eighth aspect, an embodiment of this application provides a computer program product including instructions. When the instructions run on a computer, the computer is enabled to perform the method provided in any one of the first aspect or the possible implementations of the first aspect, or the computer is enabled to perform the method provided in any one of the second aspect or the possible implementations of the second aspect.

According to a ninth aspect, an embodiment of this application provides a chip system. The chip system includes a processor, configured to support a device in implementing functions in the first aspect, or configured to support a device in implementing functions in the second aspect.

In a possible design, the chip system further includes a memory. The memory is configured to store necessary program instructions and data. The chip system may include a chip, or may include a chip and another discrete component.

According to a tenth aspect, an embodiment of this application further provides a chip system. The chip system includes a processor and an interface. The interface is configured to obtain a program or instructions. The processor is configured to invoke the program or the instructions to implement or support a device in implementing functions in the first aspect, or the processor is configured to invoke the program or the instructions to implement or support a device in implementing functions in the second aspect.

In a possible design, the chip system further includes a memory. The memory is configured to store program instructions and data that are necessary for a terminal device. The chip system may include a chip, or may include a chip and another discrete component.

For technical effects that can be achieved in any one of the third aspect and the fifth aspect or the possible implementations of the third aspect and the fifth aspect, refer to the descriptions of the technical effects that can be achieved in any one of the first aspect or the possible implementations of the first aspect. For technical effects that can be achieved in any one of the fourth aspect and the fifth aspect or the possible implementations of the fourth aspect and the fifth aspect, refer to the descriptions of the technical effects that can be achieved in any one of the second aspect or the possible implementations of the second aspect. Details are not described herein again.

BRIEF DESCRIPTION OF DRAWINGS

FIG. 1 is a diagram in which common signals of two cells coexist in a frequency division manner, a time division manner, or the like;
FIG. 2 is a diagram of an architecture of a communication system to which a communication method provided in an embodiment of this application may be applied;
FIG. 3A is a diagram of an indication relationship between an SSB, a SIB 1 PDCCH, and a SIB 1 PDSCH of a cell;
FIG. 3B is a diagram of performing a physical-layer processing procedure of a SIB 1 PDCCH on a base station side;
FIG. 3C is a diagram of performing a physical-layer processing procedure of a SIB 1 PDSCH on a base station side;
FIG. 3D is a schematic flowchart of generating a scrambling sequence on a base station side;
FIG. 4 is a schematic flowchart of a communication method according to an embodiment of this application;
FIG. 5 is a diagram of an architecture of a communication system to which a communication method provided in an embodiment of this application may be applied;
FIG. 6A is a diagram of content of a common SIB 1 according to an embodiment of this application;
FIG. 6B is a diagram of an example of content of a common SIB 1 according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip apparatus according to an embodiment of this application.

DESCRIPTION OF EMBODIMENTS

Embodiments of this application provide a communication method and apparatus. The method and the apparatus are based on same or similar technical concepts. Because the method and the apparatus have similar problem-resolving principles, for implementation of the method and the apparatus, mutual reference may be made. Repeated parts are not described again.

For ease of understanding the technical solutions in the embodiments of this application, the following first briefly describes existing multi-cell spectrum sharing.

In some high-reliability scenarios (for example, high-speed railways and workshops), a "multi-guarantee" manner is usually used for networking, to be specific, a plurality of cells are deployed in an area. In this way, when a fault occurs in one of the cells, the other cells can still provide services for users in the area. This networking manner greatly reduces a probability of network interruption and improves network robustness.

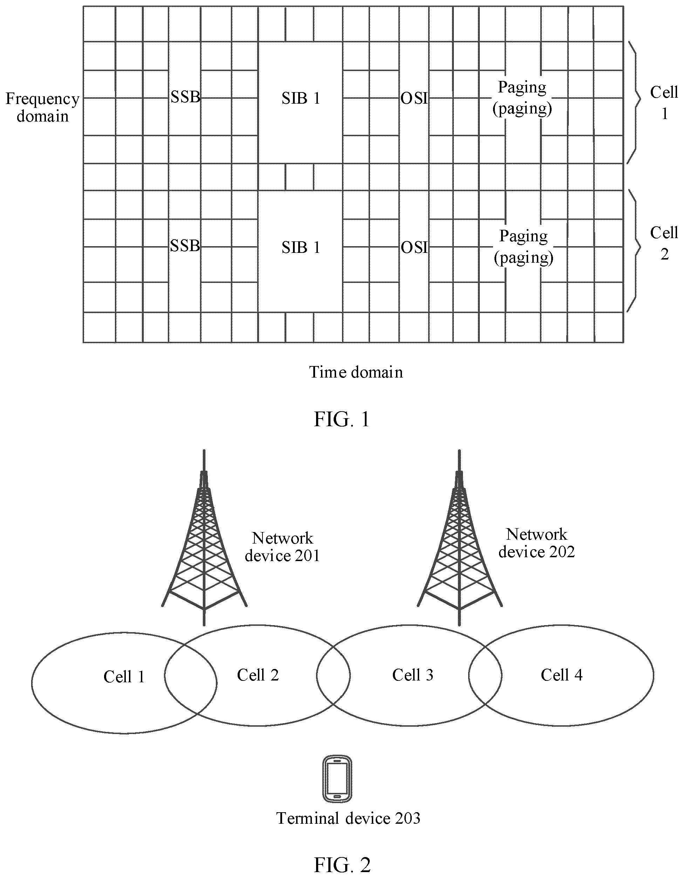

Because an available spectrum of a network is fixed, when the network is deployed in the foregoing manner, a plurality of co-coverage cells need to share a same spectrum, and common signals of these cells may coexist in a frequency division manner, a time division manner, or the like. FIG. 1 is an example diagram in which common signals of two cells coexist in a frequency division manner, a time division manner, or the like. The common signal includes a synchronization signal block (synchronization signal block, SSB), a system information block 1 (system information block 1, SIB 1), other system information (other system information, OSI), and paging (Paging).

In the foregoing scenario, because the plurality of cells share the same spectrum, and each cell has one independent common signal, total time-frequency resources occupied by the common signals proportionally increase, and consequently, time-frequency resources that can be used for service transmission are greatly reduced. Therefore, to improve a service capacity of a system, resource overheads of the common signals need to be reduced.

Table 1 shows an example of values of proportions of time-frequency resources for the common signal. It can be learned from Table 1 that time-frequency resource overheads occupied by the SIB 1 account for more than half of total overheads of the common signal. Clearly, in the common signal, the SIB 1 occupies the largest time-frequency resource overheads compared with other information. Therefore, reducing the resource overheads of the SIB 1 is a key to reducing the resource overheads of the common signal.

Table 1

| Overheads of a common signal | Case 1 (Case 1) 10 M*2 bandwidth, four beams | Case 2 (Case 2) 20 M*2 bandwidth, four beams | Case 3 (Case 3) 50M bandwidth, seven beams | Case 4 (Case 4) 100 M bandwidth, seven beams |
|---|---|---|---|---|
| SSB (single cell) | 3.8% | 1.9% | 1.9% | 0.9% |
| SIB 1 (single cell) | 9.2% | 9.1% | 7.9% | 3.8% |
| OSI (single cell) | 2.3% | 2.3% | 2.0% | 1.0% |
| Paging (single cell) | 2.3% | 1.1% | 1.0% | 0.5% |
| Total for a single cell | 17.6% | 14.4% | 12.8% | 6.2% |
| Total for two cells | 17.6%*2 | 14.4%*2 | 12.8%*2 | 6.2%*2 |

On the basis of the above, this application provides a communication method. The method includes: A first network device generates common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a first parameter in the first information element includes a physical cell identifier of the first cell, and the first parameter in the second information element includes a physical cell identifier of the second cell. Therefore, it can be learned that because the value of the second parameter in the first information element may also be used as the value of the second parameter in the system information of the second cell, the value of the second parameter in the system information of the second cell does not need to be additionally added to the second information element in the system information. Therefore, in a scenario in which co-coverage is provided for a plurality of cells, a terminal device may determine system information of any one of the plurality of cells by using the common system information, so that total resource overheads of the system information can be effectively reduced.

The communication method provided in the embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

FIG. 2 shows an architecture of a communication system to which a communication method provided in an embodiment of this application may be applied. As shown in FIG. 2, a communication system 200 includes but is not limited to a plurality of network devices (for example, a network device 201 and a network device 202 in the figure) and a terminal device 203. Each network device may manage at least one cell.

For example, the network device 201 is configured to manage a cell 1 and a cell 2 (including but not limited to the cell 1 and the cell 2), and the network device 202 is configured to manage a cell 3 and a cell 4 (including but not limited to the cell 3 and the cell 4). The terminal device 203 may communicate with the network device 201 by accessing the cell 1 or the cell 2, and the terminal device 203 may further communicate with the network device 202 by accessing the cell 3 or the cell 4.

It should be noted that the communication system 200 includes but is not limited to the network device 201, the network device 202, and the terminal device 203, and may further include a communication device such as a core network device. The network devices in the communication system 200 are not limited to the network device 201 and the network device 202, and a terminal device included in the communication system 200 is not limited to the terminal device 203.

A type of the network device (or the terminal device) and a quantity of network devices (or terminal devices) in the communication system 200 are not specifically limited in this application. In addition, there may be an overlapping part or a non-overlapping part between cells managed by a same network device and between cells managed by different network devices. This is not limited in this application.

The following provides the following descriptions about the terminal device 203 and the network device (for example, the network device 201) in the communication system shown in FIG. 2.

The terminal device 203 may be a wireless terminal device that can receive scheduling and indication information from the network device. The terminal device 203 may be a device that provides voice and/or data connectivity for a user, a handheld device with a wireless connection function, or another processing device connected to a wireless modem.

The terminal device 203 is also referred to as user equipment (user equipment, UE), a mobile station (mobile station, MS), a mobile terminal (mobile terminal, MT), or the like. The terminal device is a device that includes a wireless communication function (providing voice/data connectivity for the user). Currently, some examples of the terminal device are a mobile phone (mobile phone), a tablet computer, a notebook computer, a palmtop computer, a satellite terminal, a mobile internet device (mobile internet device, MID), a point of sale (point of sale, POS) device, a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). For example, the wireless terminal in the internet of vehicles may be a vehicle-mounted device, an entire-vehicle device, or an in-vehicle module, a vehicle. The wireless terminal in industrial control may be a camera, a robot, or the like. The wireless terminal in the smart home may be a television, an air conditioner, a sweeper, a speaker, a set-top box, or the like.

The terminal device 203 may be widely used in various scenarios, for example, device-to-device (device-to-device, D2D) communication, vehicle to everything (vehicle to everything, V2X) communication, machine-type communication (machine-type communication, MTC), an internet of things (internet of things, IoT), telemedicine, smart furniture, smart offices, smart wearables, and smart transportation.

In the embodiments of this application, an apparatus configured to implement a function of the terminal device may be the terminal device, or may be an apparatus that can support the terminal device in implementing the function, for example, a chip system. The apparatus may be installed in the terminal device or used together with the terminal device. In the embodiments of this application, the chip system may include a chip, or may include a chip and another discrete component.

The network device 201 is a node in a radio access network (radio access network, RAN), and may also be referred to as a base station, or may be referred to as a RAN node (or device). Currently, some examples of the network device 201 are a next generation NodeB (next generation nodeB, gNB), a next generation evolved NodeB (next generation evolved nodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device 201 may alternatively be a satellite, and the satellite may also be referred to as a high-altitude platform, a high-altitude aircraft, or a satellite base station. The network device 201 may alternatively be another device that has a network device function. For example, the network device 201 may alternatively be a device that functions as a network device in device-to-device (device-to-device, D2D) communication. The network device 201 may alternatively be a network device in a future possible communication system.

In some deployments, the network device 201 may include a central unit (central unit, CU) and a distributed unit (distributed unit, DU). The network device 201 may further include an active antenna unit (active antenna unit, AAU). The CU implements some functions of the network device 201, and the DU implements some functions of the network device 201. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical-layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device 201 may be a device including one or more of a CU node, a DU node, and an AAU node. In addition, the CU may be classified as a network device in the RAN, or a network device in a core network (core network, CN). This is not limited in this application.

In the embodiments of this application, an apparatus configured to implement a function of the network device may be the network device, or may be an apparatus that can support the network device in implementing the function, for example, a chip system. The apparatus may be installed in the network device or used together with the network device. In the embodiments of this application, the chip system may include a chip, or may include a chip and another discrete component.

In a possible implementation, the terminal device 203 and the network device 201 may communicate with each other through an air interface (Uu) link, a communication link of a non-terrestrial network NTN, or the like between the terminal device and the network device. Terminal devices may communicate with each other through a sidelink (sidelink, SL) such as D2D. Optionally, the terminal device 203 may be in a connected state or an active (active) state, or may be in a non-connected (inactive) state or an idle (idle) state, or may be in another state, for example, a state in which the terminal device is not attached to a network or has not performed downlink synchronization with a network.

Communication may be performed between the network device 201 and the terminal device 203, between network devices, and between terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), for example, by using a 700/900 megahertz (megahertz, MHz) or a 2.1/2.6/3.5 GHz frequency band, or may be performed by using a spectrum that is at least 6 GHz, for example, by using a millimeter wave or a terahertz (terahertz, THz) wave, or may be performed by using both a spectrum below 6 GHz and a spectrum that is at least 6 GHz. Spectrum resources used for wireless communication are not specifically limited in the embodiments of this application.

For example, if the terminal device 203 communicates with the network device 201 by accessing the cell 1 or the cell 2, before accessing the cell 1 or the cell 2, the terminal device 203 needs to obtain system information required for initiating random access to the cell 1 or the cell 2, and the information is included in a SIB 1.

For ease of understanding the technical solutions in the embodiments of this application, the following briefly describes content and a processing procedure of the SIB 1.

(1) System information block SIB 1

The SIB 1 includes information required by the terminal device to access a network, and the SIB 1 includes the following parameters:

cell selection related parameters (cellSelectionInfo), including cell reference signal received power (reference signal received power, RSRP) and reference signal received quality (reference signal received quality, RSRQ) thresholds, and the like;

cell access related parameters (cellAccessRelatedInfo), including a network identifier, a cell identifier, a tracking area code, a cell reservation indication, and the like;

connection establishment failure control related parameters (ConnEstFailureControl), including a quantity of connection establishment failures, a signal quality penalty value, and the like;

system information scheduling related parameters (si-SchedulingInfo), including a periodicity of other system information (OSI), a length of a scheduling window, and the like;

serving cell common configuration parameters (servingCellConfigCommon), including a periodicity of an SSB, an initial uplink/downlink operating bandwidth configuration, a subcarrier spacing, and the like;

emergency service indication information (ims-EmergencySupport/ecallOver-IMS-Support), including indication information supporting an internet-protocol multimedia system (Internet-protocol Multimedia Subsystem, IMS) emergency call/e-call service;

timers and constants (ue-TimersAndConstants), including a value of a T300 timer used in an RRC establishment process, a value of a T301 timer used in an RRC reestablishment process, an N310 parameter used in an RRC reconfiguration process, and the like; and

unified access control parameters (uac-BarringInfo), including an access control barring factor, an access control barring time, and the like.

(2) Processing procedure of the SIB 1

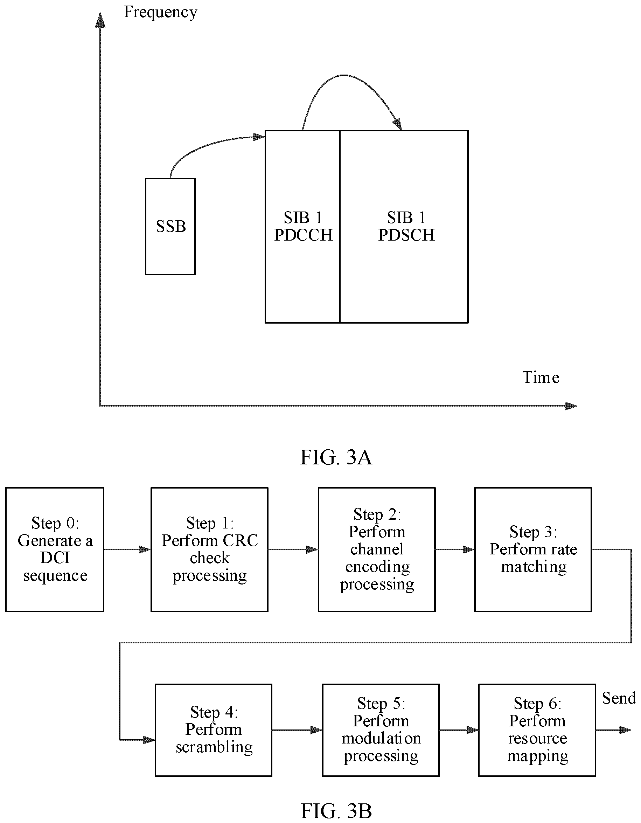

FIG. 3A shows an indication relationship between an SSB, a SIB 1 PDCCH, and a SIB 1 PDSCH. As shown in FIG. 3A, the SIB 1 is carried on a physical downlink shared channel (physical downlink shared channel, PDSCH), and the PDSCH is scheduled by a corresponding physical downlink control channel (physical downlink control channel, PDCCH). Configuration information of the PDCCH is carried in master system information (master information block, MIB), and the MIB is included in the SSB.

A procedure in which UE obtains the SIB 1 (namely, the SIB 1 PDSCH) includes: The SSB is first received, and a time-frequency location of the SIB 1 PDCCH is obtained from the MIB in the SSB; then the SIB 1 PDCCH is monitored at the corresponding time-frequency location, to obtain scheduling information (for example, a time-frequency location and a modulation and coding scheme) of the SIB 1 PDSCH from the SIB 1 PDCCH; and further, the SIB 1 PDSCH may be received at the corresponding time-frequency location based on the scheduling information. In addition, the SSB includes a PCI of a cell, and the UE may obtain the PCI of the cell after receiving the SSB.

The following describes in detail physical-layer processing procedures of the SIB 1 PDCCH and the SIB 1 PDSCH.

A physical-layer processing procedure of the SIB 1 PDCCH is as follows:

FIG. 3B shows the physical-layer processing procedure of the SIB 1 PDCCH on a base station side (which may alternatively be a cell 1 managed by a base station). The procedure mainly includes the following steps.

Step 0: Generate a DCI sequence.

For example, the base station generates a DCI sequence a = $a_0 a_1 ... a_{A-1}$, where A is a length (namely, a quantity of bits) of the DCI sequence.

Step 1: Perform CRC check processing.

For example, step 1 may include the following two substeps:

(1) Cyclic redundancy check (cyclic redundancy check, CRC) addition: The base station performs CRC calculation based on the DCI sequence a in step 0. During calculation, a generator polynomial $g_{CRC24C}(D)$ may be used to obtain 24 CRC parity check bits p = $p_0 p_1 ... p_{23}$. Further, p is added after the DCI sequence a, to obtain a sequence b = $a_0 a_1 ... a_{A-1} p_0 p_1 ... p_{23}$.

(2) CRC scrambling: The base station scrambles the last 16 bits (that is, $p_8 ... p_{23}$) of the sequence b by using a system information-radio network temporary identifier (system information-radio network temporary identifier, SI-RNTI), to obtain a sequence c = $c_0 c_1 ... c_{A+23}$.

It should be noted that a value of the SI-RNTI is 1111111111111111.

Step 2: Perform channel encoding processing.

For example, step 2 may include the following two substeps:

(1) Bit interleaving: The base station interleaves the sequence c (a specific interleaving pattern is specified in a protocol) to obtain a sequence d = $d_0 d_1 ... d_{A+23}$.

(2) Encoding: The base station performs polar code (polar code) encoding on the sequence d to obtain a sequence e = $e_0 e_1 ... e_{N-1}$, where N is a length of the sequence obtained through encoding.

Step 3: Perform rate matching.

For example, step 3 may include the following two substeps:

(1) Sub-block interleaving: The base station divides the sequence e into 32 sub-blocks, and performs interleaving on the 32 sub-blocks (a specific interleaving pattern is specified in a protocol) to obtain a sequence f = $f_0 f_1 ... f_{N-1}$.

(2) Bit selection: The base station performs a puncturing (puncturing), shortening (shortening), or repetition (repetition) operation on the sequence f based on a magnitude relationship between a length N of the sequence f and a quantity M of bits that can actually be transmitted, to obtain a sequence g = $g_0 g_1 ... g_{M-1}$.

Step 4: Perform scrambling.

For example, the base station scrambles the sequence g by using a scrambling sequence, to obtain a sequence h = $h_0 h_1 ... h_{M-1}$, where the scrambling sequence is q = $q_0 q_1 ... q_{M-1}$, and the scrambling sequence is generated by performing modulo-2 addition on $x_0(n)$ and $x_1(n)$. $x_0(n)$ is generated by a 31-bit shift register, and an initial value of the shift register is 0...0000000000000001. $x_1(n)$ is also generated by a 31-bit shift register, the zeroth bit to the ninth bit of an initial value of the shift register are a PCI of the cell 1, and the remaining bits are 0.

Step 5: Perform modulation processing.

For example, the base station performs quadrature phase shift keying (quadrature phase shift keying, QPSK) modulation on the sequence h to obtain a modulated symbol sequence i = $i_0 i_1 ... i_{S-1}$, where S is a quantity of symbols obtained through modulation.

Step 6: Perform resource mapping.

For example, the base station sequentially maps all items in the sequence i to resource element groups (resource element group, REG) of a control resource set (control resource set, CORESET) (a specific sequence is specified in a protocol), and each item is mapped to one REG. One REG is a time-frequency resource formed by one resource block (resource block, RB) and one orthogonal frequency division multiplexing (orthogonal frequency division multiplexing, OFDM) symbol, and every six REGs constitute one control channel element (control channel element, CCE). Further, interleaving is performed on the CCE by using an interleaver, and the interleaver meets the following formula:

$$f(x) = \begin{cases} \left(\frac{x}{2} + n_{\text{shift}}\right) \bmod (2K), & x = 0,2,...,2K-2 \\ \left(K + \frac{x-1}{2} + n_{\text{shift}}\right) \bmod (2K), & x = 1,2,...,2K-1 \end{cases},$$

where

x is a number of the CCE before interleaving, f(x) is a number of a CCE after interleaving, *K* is equal to half of a quantity of CCEs included in the CORESET, and $n_{\text{shift}}$ is equal to the PCI of the cell 1.

After being mapped to a corresponding time-frequency resource, the CCE obtained through interleaving may be sent (broadcast).

Correspondingly, a PDCCH processing procedure performed on a UE side after the UE receives the time-frequency resource is an inverse process of the processing procedure for generating the PDCCH on the base station side. To be specific, the UE performs demodulation, descrambling, sub-block de-interleaving, channel decoding, and CRC check on the corresponding time-frequency resource, to restore the DCI. For details, refer to the processing procedure on the base station side or the conventional technology. Details are not described herein again.

A physical-layer processing procedure of the SIB 1 PDSCH is as follows:

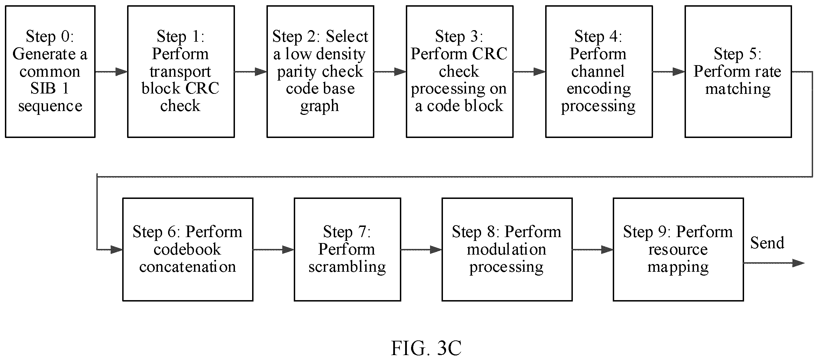

FIG. 3C shows the physical-layer processing procedure of the SIB 1 PDSCH on a base station side (for example, a cell 1). The procedure mainly includes the following steps.

Step 0: Generate a common SIB 1 sequence.

For example, a base station generates a SIB 1 sequence $a = a_0 a_1 ... a_{A-1}$, where A is a length (a quantity of bits) of the sequence, and the sequence is also referred to as a transport block (transport block, TB) of a common SIB 1.

Step 1: Perform CRC check processing.

For example, the base station performs CRC calculation based on the sequence a. During calculation, a generator polynomial $g_{CRC24A}(D)$ or $g_{CRC16}(D)$ is used to obtain 24 or 16 CRC parity check bits $p = p_0 p_1 ... p_{L-1}$ (L = 24 or 16). Further, p is added after the SIB 1 sequence a, to obtain a sequence $b = b_0 b_1 ... b_{A+L-1}$.

Step 2: Select a low density parity check code (low density parity check code, LDPC) base graph (Base Graph).

For example, the base station selects the LDPC base graph (a base graph 1 or a base graph 2) based on the length A of the sequence a and a code rate R. A specific selection method is specified in a protocol.

Step 3: Perform CRC check processing on a code block.

For example, the base station divides the sequence b into N subsequences, and lengths of the subsequences are the same. CRC calculation is performed on each subsequence. During calculation, a generator polynomial $g_{CRC24B}(D)$ is used to calculate 24 CRC parity check bits, and then the 24 CRC parity check bits are added after the subsequence, to obtain a new sequence. Therefore, a total of N new sequences are obtained, where an $i^{th}$ (i = 0, 1, ..., N-1) new sequence is denoted as $c^{(i)} = c^{(i)}_0 c^{(i)}_1 ... c^{(i)}_{K-1}$, and K is a length of each new sequence.

Step 4: Perform channel encoding processing.

For example, the base station performs LDPC encoding on the sequence $c^{(i)}$ (i = 0, 1, ..., N-1) to obtain a sequence $d^{(i)} = d^{(i)}_0 d^{(i)}_1 ... d^{(i)}_{G-1}$, where G is a length of the sequence $d^{(i)}$.

Step 5: Perform rate matching.

For example, the base station performs bit selection and bit interleaving (a specific selection manner and interleaving pattern are specified in a protocol) on the sequence $d^{(i)}$ (i = 0, 1, ..., N-1) to obtain a sequence $e^{(i)} = e^{(i)}_0 e^{(i)}_1 ... e^{(i)}_{E-1}$, where E is a length of the sequence $e^{(i)}$.

Step 6: Perform code block concatenation.

For example, the base station sequentially connects sequences e(i) (i = 0, 1, ..., N-1) to obtain a sequence $f = f_0 f_1 ... f_{M-1}$, where M is a length of the sequence f.

Step 7: Perform scrambling.

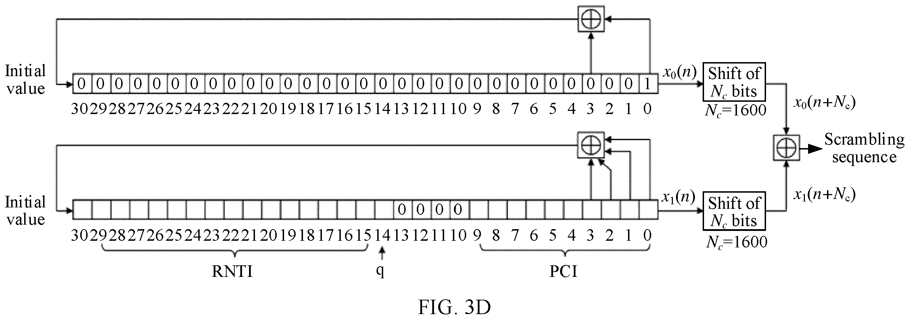

For example, the base station scrambles the sequence f by using a scrambling sequence, to obtain a sequence $g = g_0 g_1 ... g_{M-1}$, where the scrambling sequence is $q = q_0 q_1 ... q_{M-1}$, and the scrambling sequence is generated by performing modulo-2 addition on $x_0(n)$ and $x_1(n)$ (as shown in FIG. 3D). $x_0(n)$ is generated by a 31-bit shift register, and an initial value of the shift register is 0...0000000000000000001. $x_1(n)$ is also generated by a 31-bit shift register, and an initial value of the shift register is $c_{init} = n_{RNTI} \cdot 2^{15} + q \cdot 2^{14} + n_{ID}$, where a value of $n_{RNTI}$ is 111111111111111, a value of q is 0 or 1, and a value of $n_{ID}$ is a PCI of the cell 1.

Step 8: Perform modulation processing.

For example, the base station modulates the sequence g to obtain a modulated symbol sequence $h = h_0 h_1 ... h_{S-1}$, where S is a quantity of symbols obtained through modulation.

Step 9: Perform resource mapping.

For example, the base station maps the sequence h to a physical resource block. This step includes layer mapping, antenna port mapping, physical resource block mapping, and the like. After the mapping is completed, the sequence h may be sent (that is, broadcast). For details, refer to implementation in the conventional technology. Details are not described herein.

Correspondingly, a processing procedure of the SIB 1 PDSCH on a UE side after UE receives the physical resource block sent by the base station side is an inverse process of the processing procedure on the base station side. To be specific, the UE performs demodulation, descrambling, channel decoding, and CRC check on a corresponding time-frequency resource, to restore the SIB 1.

It should be noted that in this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. For example, the configuration information may include but is not limited to one or a combination of at least two of radio resource control signaling, media access control MAC layer signaling, and physical layer signaling. The radio resource control signaling includes, for example, radio resource control RRC signaling. The MAC layer signaling includes, for example, a MAC control element (control element, CE). The physical layer signaling includes, for example, downlink control information DCI.

The following describes the technical solutions in the embodiments of this application with reference to the accompanying drawings in the embodiments of this application.

An embodiment of this application provides a communication method. The method may be applied to but is not limited to the communication system shown in FIG. 2. A quantity of network devices and a quantity of terminal devices in the communication system shown in FIG. 2 are not specifically limited in this application. Different terminal devices may connect to and communicate with a same network device or different network devices, or a plurality of network devices may connect to and communicate with a same terminal device. Allocation of connections and communication between the network device and the terminal device is not specifically limited in this application. In addition, geographical locations of the terminal devices and the network devices in the communication system are not specifically limited in this application. The method may be performed by a network device (or a terminal device) in this application, or may be performed by a chip corresponding to the network device (or the terminal device). This is not specifically limited in this application. In addition, it should be noted that ordinal numbers such as "first" and "second" mentioned below are used to distinguish between a plurality of objects for ease of description, but are not used to limit a sequence, a time sequence, priorities, or importance degrees of the plurality of objects.

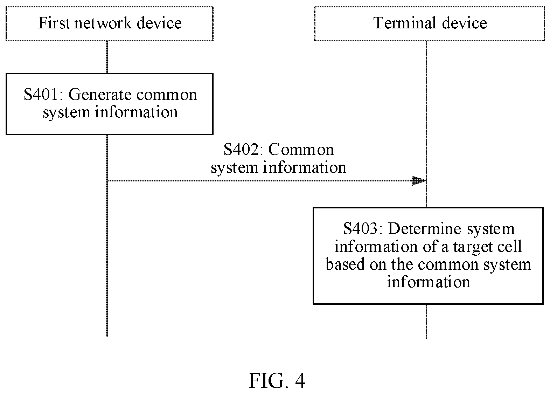

FIG. 4 is a flowchart of a communication method according to an embodiment of this application. The method may specifically include the following steps.

S401: A first network device generates common system information.

In an implementation, the first network device generates the common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell.

It should be noted that a plurality of parameters in system information of each cell may be a plurality of parameters in an existing SIB 1 described above. The plurality of parameters include a first parameter and a second parameter. The plurality of parameters may be classified into the first parameter and the second parameter based on an actual case. This is not limited in this application.

In addition, in this application, the first information element is not limited to include the values of the plurality of parameters in the system information of the first cell. In practice, the first information element may alternatively be set to include values of a plurality of parameters in system information of another cell. Therefore, the first cell may be equivalent to a reference cell, and is not limited to a specific cell. A cell may be set as the first cell based on an actual requirement. In addition, the plurality of elements in the common system information include but are not limited to the first information element and the second information element. In practice, the plurality of elements may further include a third information element, a fourth information element, and the like. Alternatively, the second cell may be considered as any one of a plurality of cells other than the first cell, and a corresponding information element may be configured in the common system information for the any cell with reference to the second cell.

Optionally, the first network device may be a base station.

S402: The first network device sends the common system information.

Correspondingly, a terminal device receives the common system information from the first network device.

The first network device may broadcast the common system information.

In an implementation, the method further includes: The first network device sends first information. The first information indicates a common physical cell identifier. Optionally, the first network device may broadcast the first information.

For example, the first information may be physical cell identifier PCI information, and the PCI information may be carried in downlink control information DCI. The first network device performs physical-layer processing on the DCI to obtain a PDCCH. For a physical-layer processing procedure, refer to the physical-layer processing procedure of the SIB 1 PDCCH shown in FIG. 3B. The first network device sends the PDCCH. Correspondingly, the terminal device may receive the PDCCH from the first network device, and the terminal device performs physical-layer inverse processing on the PDCCH to obtain the DCI, and obtains the PCI information from the DCI.

Based on this implementation, that the first network device sends the common system information may include: The first network device determines a scrambling sequence based on the common physical cell identifier; the first network device scrambles the common system information by using the scrambling sequence; and the first network device sends the scrambled common system information.

Correspondingly, the terminal device receives the first information from the first network device. The first information indicates the common physical cell identifier.

That a terminal device receives the common system information from the first network device may include: The terminal device receives a signal from the first network device; the terminal device determines a descrambling sequence based on the common physical cell identifier indicated by the first information; and the terminal device descrambles the signal by using the descrambling sequence, to obtain the common system information.

For example, the first network device may perform physical-layer processing on the common system information to obtain a PDSCH. For the physical-layer processing procedure, refer to the physical-layer processing procedure of the SIB 1 PDSCH shown in FIG. 3C. However, a difference from the procedure shown in FIG. 3C lies in that in step 7, the scrambling sequence used by the first network device for scrambling is obtained based on the common physical cell identifier. The first network device sends the PDSCH. Correspondingly, the terminal device receives the PDSCH from the first network device, and the terminal device performs physical-layer inverse processing on the PDSCH to obtain the common system information. A difference between the inverse processing process and an existing processing process is that the descrambling sequence used for descrambling is obtained based on the common physical cell identifier (obtained by the terminal device based on an indication of the first information).

In an implementation, the first information includes the common physical cell identifier or a difference between the common physical cell identifier and a physical cell identifier of a cell managed by the first network device.

If the first information includes the difference between the common physical cell identifier and the physical cell identifier of the cell managed by the first network device, in an implementation, the first network device further sends a first synchronization signal block. The first synchronization signal block includes the physical cell identifier of the cell managed by the first network device. In this implementation, it can be ensured that the terminal device at a receive end effectively and accurately obtains the common physical cell identifier.

Correspondingly, before the terminal device determines the descrambling sequence based on the common physical cell identifier indicated by the first information, the method further includes: The terminal device receives the first synchronization signal block from the first network device. The first synchronization signal block includes the physical cell identifier of the cell managed by the first network device. The terminal device determines the common physical cell identifier based on the physical cell identifier of the cell managed by the first network device and the difference, in the first information, between the common physical cell identifier and the physical cell identifier of the cell managed by the first network device.

In the foregoing implementation, the first network device may flexibly indicate the common physical cell identifier to the terminal device by using the first information. Further, the terminal device may successfully descramble a signal from the first network device by using the common physical cell identifier, to effectively obtain the common system information.

It should be noted that indication may be performed in the first information in a direct manner. For example, the first information includes the common physical cell identifier or the difference between the common physical cell identifier and the physical cell identifier of the cell managed by the first network device, or the first information is the common physical cell identifier or the difference between the common physical cell identifier and the physical cell identifier of the cell managed by the first network device. Indication may alternatively be performed in the first information in an indirect manner. For example, the first information further includes second information. The second information indicates the common physical cell identifier or the difference between the common physical cell identifier and the physical cell identifier of the cell managed by the first network device, or the second information is the common physical cell identifier or the difference between the common physical cell identifier and the physical cell identifier of the cell managed by the first network device. A specific indication manner of the first information is not specifically limited in this application.

S403: The terminal device determines system information of a target cell based on the common system information.

In an implementation, that the terminal device determines system information of a target cell based on the common system information includes: The terminal device receives a second synchronization signal block from a second network device. The second synchronization signal block includes a physical cell identifier of the target cell managed by the second network device. The terminal device determines the system information of the target cell from the common system information based on the physical cell identifier of the target cell.

It should be noted that the second network device and the first network device may be a same network device, or may be different network devices. If the second network device and the first network device are a same network device, it indicates that one network device sends the common system information and the common physical cell identifier, and the target cell accessed by the terminal device at the receive end is also a cell managed by the network device. If the second network device and the first network device are different network devices, it indicates that one network device sends the common system information and the common physical cell identifier, and the target cell accessed by the terminal device at the receive end may be a cell managed by another network device. Therefore, whether the first network device and the second network device are a same network device is not specifically limited in the solution of this application, and may be set based on an actual case.

In an implementation, that the terminal device determines the system information of the target cell from the common system information based on the physical cell identifier of the target cell may include but is not limited to the following two cases:

Case 1: When the physical cell identifier of the target cell is the physical cell identifier of the first cell, the terminal device obtains the first information element including the physical cell identifier of the first cell from the common system information; and the terminal device uses, as the system information of the target cell, the values of the plurality of parameters included in the first information element.

Case 2: When the physical cell identifier of the target cell is the physical cell identifier of the second cell, the terminal device obtains the second information element including the physical cell identifier of the second cell from the common system information; obtains the values of the plurality of parameters in the first information element from the common system information; replaces a value of the first parameter in the plurality of parameters with the value of the first parameter in the second information element, to obtain updated values of the plurality of parameters; and uses the updated values of the plurality of parameters as the system information of the target cell.

In this implementation, the terminal device may determine a cell whose physical cell identifier is the physical cell identifier of the target cell included in the second synchronization signal block from the second network device, and further determine a corresponding information element from the common system information. If it is determined that the physical cell identifier of the target cell is the physical cell identifier of the first cell, it indicates that the target cell to be accessed by the terminal device is the first cell. Because the values of the plurality of parameters in the first information element in the common system information correspond to the system information of the first cell, the values of the plurality of parameters in the first information element may be used as the system information of the target cell.

If it is determined that the physical cell identifier of the target cell is the physical cell identifier of the second cell, it indicates that the target cell to be accessed by the terminal device is the second cell. Because the value of the first parameter in the second information element in the common system information corresponds to the second cell, and the value of the second parameter in the system information of the second cell is the same as the value of the second parameter in the system information of the first cell, it is only necessary to replace the value of the first parameter in the first information element with the value of the first parameter in the second information element and use, as the system information of the target cell, values that are of the plurality of parameters in the first information element and that are obtained through replacement. Therefore, it can be learned that in a scenario in which co-coverage is provided for a plurality of cells (for example, the first cell and the second cell), a network device generates the common system information, so that the terminal device can flexibly access the cell to implement communication. In addition, if values of parameters in system information of different cells are the same, the values may be combined for sharing during generation of the common system information, so that total resource overheads of the common system information can be reduced.

It should be understood that, in the solution of this application, steps S401 to S403 are described by using one first network device (and one second network device) and one terminal device as an example. In practice, there may be a plurality of network devices, and each network device may correspond to a plurality of terminal devices that are to perform access. Steps S401 to S403 may be performed between the network device and the terminal device with reference to steps S401 to S403, to implement communication. Details are not described herein again.

In conclusion, this application provides a communication method. The method includes: A first network device generates common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a first parameter in the first information element includes a physical cell identifier of the first cell, and the first parameter in the second information element includes a physical cell identifier of the second cell. Therefore, it can be learned that because the value of the second parameter in the first information element may also be used as the value of the second parameter in the system information of the second cell, the value of the second parameter in the system information of the second cell does not need to be additionally added to the second information element in the system information. Therefore, in a scenario in which co-coverage is provided for a plurality of cells, a terminal device may determine system information of any one of the plurality of cells by using the common system information, so that total resource overheads of the system information can be effectively reduced.

The following further describes in detail the communication method provided in the foregoing solution of this application by using a specific embodiment.

Specific embodiment 1

In the specific embodiment 1, the first network device and the second network device in the foregoing solution of this application are a same network device, and an example in which the network device is a base station is used. The base station manages N cells, where N is a positive integer greater than 1. For example, the N cells are a cell 1, a cell 2, ..., and a cell N. The base station generates a common SIB 1 (equivalent to the common system information in the foregoing solution of this application), the N cells use the same common SIB 1, and the base station sends the common SIB 1 to a terminal device (UE).

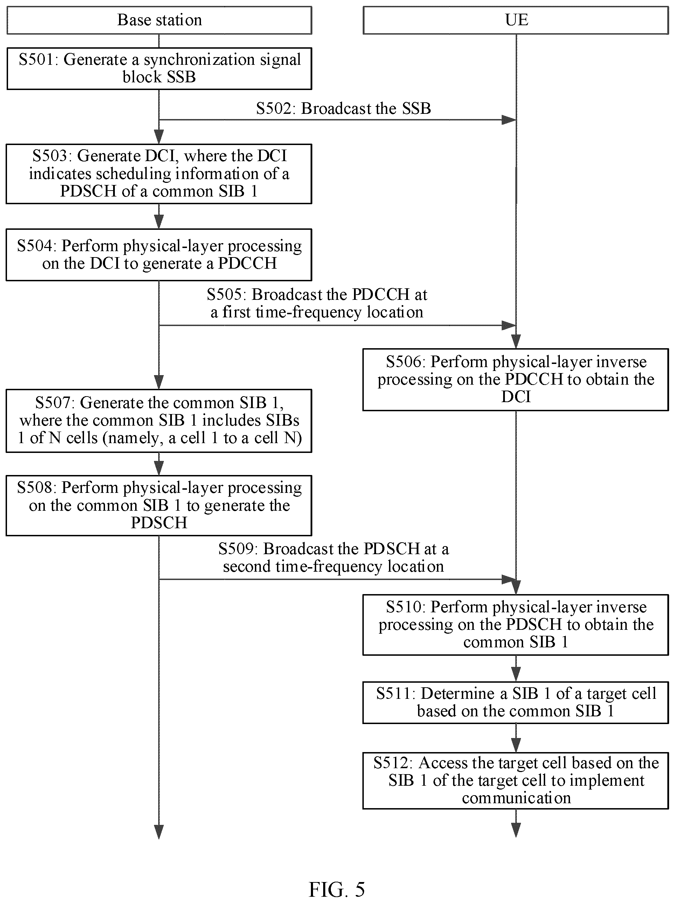

As shown in FIG. 5, a procedure of the specific embodiment 1 is as follows:

S501: The base station generates a synchronization signal block SSB.

The SSB includes the following information:

(1) a physical cell identifier (physical cell identifier, PCI) of a cell n, where $1 \leq n \leq N$; and
(2) a control resource set 0 (control resource set 0, CORESET0) and search space 0 (search space 0, SS0), where the CORESET0 and the SS0 include first time-frequency location information of a PDCCH, and the PDCCH carries downlink control information DCI indicating scheduling information of a PDSCH of the common SIB 1.

S502: The base station broadcasts the SSB.

It should be understood that the base station broadcasts the SSB, and any UE within a broadcast range of the base station can receive the SSB.

Correspondingly, the UE receives the SSB (equivalent to the first synchronization signal block of the first network device or the second synchronization signal block of the second network device in the foregoing solution of this application) from the base station, and the UE may obtain the PCI of the cell n and the first time-frequency location information of the PDCCH based on the SSB.

S503: The base station generates the DCI, where the DCI indicates the scheduling information of the PDSCH of the common SIB 1.

The DCI includes the following information:

(1) second time-frequency location information of the PDSCH of the common SIB 1; and
(2) PCI information (equivalent to the first information included in the downlink control information in the foregoing solution of this application), where the PCI information indicates a common PCI (equivalent to the common physical cell identifier in the foregoing solution of this application) used to generate a scrambling sequence (equivalent to the scrambling sequence in the foregoing solution of this application) in a PDSCH processing procedure of the common SIB 1.

For example, manners in which the PCI information indicates the common PCI used to generate the scrambling sequence in the PDSCH processing procedure of the common SIB 1 may include but are not limited to the following two indication manners:

Indication manner 1: The PCI information indicates the common PCI (equivalent to the common physical cell identifier in the foregoing solution of this application) used to generate the scrambling sequence in the PDSCH processing procedure of the common SIB 1, or the PCI information includes the common PCI used to generate the scrambling sequence in the PDSCH processing procedure of the common SIB 1.

Indication manner 2: The PCI information indicates a difference (equivalent to the difference between the common physical cell identifier and the physical cell identifier of the second cell in the foregoing solution of this application) between the common PCI used to generate the scrambling sequence and PCI(n) of the cell n, or the PCI information includes the difference (equivalent to the difference between the common physical cell identifier and the physical cell identifier of the second cell in the foregoing solution of this application) between the common PCI used to generate the scrambling sequence and PCI(n) of the cell n.

For example, if the difference, indicated by the PCI information, between the common PCI used to generate the scrambling sequence and PCI(n) of the cell n is 2, the common PCI used to generate the scrambling sequence is equal to PCI(n) of the cell n plus 2.

In the conventional technology, when concatenated code blocks are scrambled in a SIB 1 PDSCH processing procedure, a used scrambling sequence is generated based on a PCI of a cell corresponding to the SIB 1. However, for the common SIB 1 in this embodiment of this application, the common SIB 1 corresponds to a plurality of cells. If the conventional technology is used, it cannot be ensured that any UE can successfully obtain the common SIB 1 through descrambling. Therefore, in this embodiment, under the foregoing indication of the PCI information, the common PCI for generating the scrambling sequence may be indicated to the UE, to ensure that the UE can use the common PCI to generate a corresponding descrambling sequence, and further, successfully perform descrambling to obtain the subsequent common SIB 1.

S504: The base station performs physical-layer processing on the DCI to generate the PDCCH.

Optionally, when step S504 is performed, reference may be made to the processing steps of the SIB 1 PDCCH shown in FIG. 3B. Details are not described herein again.

S505: The base station broadcasts the PDCCH at a first time-frequency location.

Because the UE has obtained the first time-frequency location information of the PDCCH by receiving the SSB in step S502, correspondingly, the UE may accurately receive the PDCCH at the first time-frequency location based on the first time-frequency location information.

S506: The UE performs physical-layer inverse processing on the PDCCH to obtain the DCI.

Optionally, the UE may perform, with reference to the operation of performing physical-layer processing on the SIB 1 PDCCH on a base station side, a corresponding inverse operation to obtain the DCI. Further, the UE may obtain information carried in the DCI, for example, the second time-frequency location information of the PDSCH of the common SIB 1 and the PCI information. In addition, the UE may further obtain the common PCI based on the PCI information (or based on the PCI information and the PCI that is of the cell n and that is indicated by the synchronization signal block).

S507: The base station generates the common SIB 1, where the common SIB 1 includes SIBs 1 of the N cells (namely, the cell 1 to the cell N).

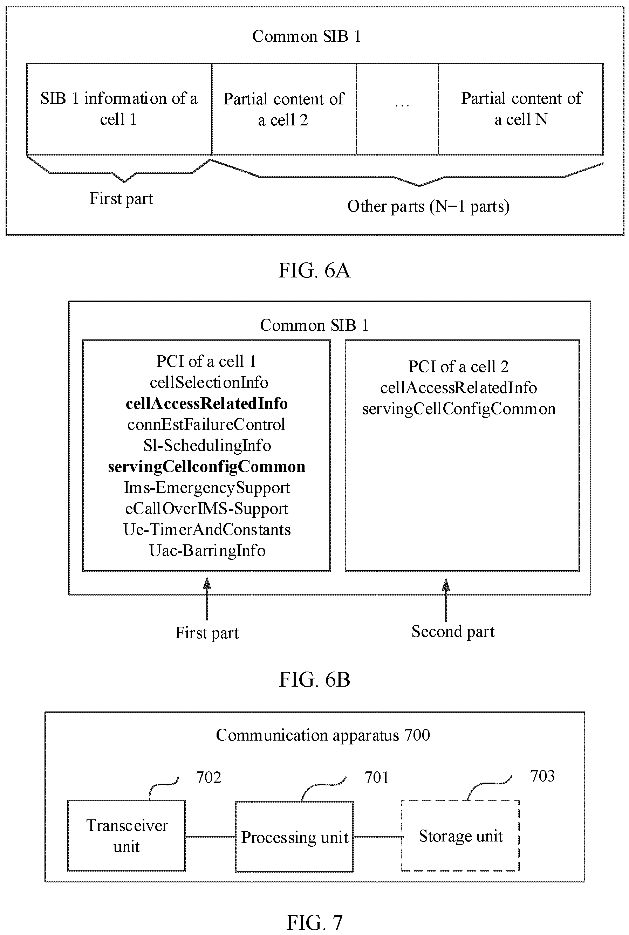

For example, referring to FIG. 6A, the common SIB 1 includes N parts (equivalent to the common system information including the plurality of information elements in the foregoing solution of this application), and the N parts include:

(1) a first part (equivalent to the first information element in the foregoing solution of this application): a SIB 1 of the cell 1, where

the SIB 1 of the cell 1 includes:

a PCI of the cell 1 (equivalent to the value of the physical cell identifier of the first cell included in the first parameter in the first information element in the foregoing solution of this application) and at least one of the following plurality of pieces of information (equivalent to another parameter included in the first information element in the foregoing solution of this application):

cell 1 selection parameters (cellSelectionInfo), including cell reference signal received power (reference signal received power, RSRP) and reference signal received quality (reference signal received quality, RSRQ) thresholds, and the like;

cell access parameters (cellAccessRelatedInfo), including a network identifier, a tracking area code, a cell reservation indication, and the like; connection establishment failure control parameters (ConnEstFailureControl), including a quantity of connection establishment failures, a signal quality penalty value, and the like;

system information scheduling parameter (si-SchedulingInfo), including a periodicity of OSI and the like;

serving cell common configuration parameters (servingCellConfigCommon), including a periodicity of the SSB, a subcarrier spacing, and the like;

emergency service indication information (ims-EmergencySupport/ecallOver-IMS-Support), including indication information supporting an IMS emergency call/e-call service;

timers and constants (ue-TimersAndConstants), including a value of a T300 timer used in an RRC establishment process, a value of a T301 timer used in an RRC reestablishment process, an N310 parameter used in an RRC reconfiguration process, and the like; and

unified access control parameters (uac-BarringInfo), including an access control barring factor, an access control barring time, and the like; and

it should be noted that in this embodiment, configuring the first part of the common SIB 1 as the SIB 1 of the first cell is merely an example; the first cell may be considered as a reference cell; in actual configuration of the common SIB 1, the first part may alternatively be a SIB 1 of another cell (that is, any one of the cell 2 to the cell N); and this is not limited in this application; and

(2) other parts (each of the parts is equivalent to the second information element in the foregoing solution of this application),

including a second part (namely, partial content of the cell 2), ..., an $N^{th}$ part (namely, partial content of the cell N), where any part, for example, an $n^{th}$ ($2 \le n \le N$) part, corresponds to a parameter, in the SIB 1 of the cell n, that has a different value from that in the SIB 1 of the cell 1.

The $n^{th}$ part includes the PCI of the cell n (equivalent to the physical cell identifier of the second cell included in the value of the first parameter in the second information element in the foregoing solution of this application) and at least one of the following plurality of pieces of information (equivalent to other values included in the value of the first parameter in the second information element in the foregoing solution of this application):

cell selection parameters, cell access parameters, connection establishment failure control parameters, system information scheduling parameters, serving cell common configuration parameters, emergency service indication information, timers and constants, and unified access control parameters.

S508: The base station performs physical-layer processing on the common SIB 1 to generate the PDSCH.

Optionally, when step S508 is performed, reference may be made to the processing procedure of the SIB 1 PDSCH shown in FIG. 3C. Details are not described herein again.

It should be noted that with reference to step 7 (scrambling) that is shown in FIG. 3C and in which the used scrambling sequence is obtained based on the PCI of the cell 1 in a process of scrambling the sequence f obtained in step 6 by using the scrambling sequence, when step S508 relates to step 7, the PCI of the cell 1 is changed to the common PCI mentioned in step S503, in other words, a value of $n_{ID}$ is set to the common PCI.

S509: The base station broadcasts the PDSCH at a second time-frequency location.

Because the UE has obtained the second time-frequency location information of the PDSCH in step S506, correspondingly, the UE may accurately receive the PDSCH at the second time-frequency location based on the second time-frequency location information.

S510: The UE performs physical-layer inverse processing on the PDSCH to obtain the common SIB 1.

Optionally, the UE may perform, with reference to the operation of performing physical-layer processing on the SIB 1 PDSCH on the base station side, a corresponding inverse operation to obtain the common SIB 1. Further, the UE may obtain information carried in the common SIB 1.

It should be noted that when the UE performs a corresponding inverse operation on the SIB 1 PDSCH, corresponding to step 7 in FIG. 3B in which the base station performs a scrambling processing process on the sequence f, the descrambling sequence used by the UE side to perform corresponding descrambling may be obtained based on the common PCI obtained in step 506, to ensure that the UE can successfully perform descrambling to obtain the common SIB 1.

S511: The UE determines a SIB 1 of a target cell based on the common SIB 1.

In step S501, the UE has obtained the PCI of the cell n from the SSB from the base station. When step S511 is performed, with reference to the descriptions of the common SIB 1 in step S507, the UE may match the obtained PCI of the cell n with a PCI included in each part of the common SIB 1, and find a PCI that is the same as the PCI of the cell n, to determine a part corresponding to the cell n from the common SIB 1, and then replace a value of a corresponding parameter in the first part (namely, the SIB 1 of the cell 1) with partial content corresponding to the cell n (that is, a value of a parameter in the partial content corresponding to the cell n) and use, as the SIB 1 of the cell n, a first part obtained after replacement, in other words, the SIB 1 of the cell n may be considered as the SIB 1 of the target cell.

For example, FIG. 6B shows a common SIB 1 of two cells, that is, a SIB 1 of a cell 1 and a SIB 1 of a cell 2. A first part of the common SIB 1 is content of the SIB 1 of the cell 1, and a second part thereof is a part that differs between the SIB 1 of the cell 2 and the SIB 1 of the cell 1. The difference part includes cell access parameters (cellAccessRelatedInfo) and serving cell common configuration parameters (servingCellConfigCommon).

After the UE receives the common SIB 1, if the cell 1 is a target cell n corresponding to the PCI obtained by the UE from the SSB, the UE may access the cell 1 based on the first part of the common SIB 1 to implement communication. If the cell 2 is a target cell n corresponding to the PCI obtained by the UE from the SSB, content (content in bold in FIG. 6B) of the foregoing two parameters in the first part may be replaced with the content of the second part, another parameter in the first part is retained, and content of a parameter in the first part obtained through replacement is used as content of the SIB 1 of the cell 2. Further, the UE may access the cell 2 based on the SIB 1 of the cell 2 to implement communication.

S512: The UE accesses the target cell based on the SIB 1 of the target cell to implement communication.

According to step S511, the UE may access the cell n (namely, the target cell) based on the SIB 1 of the cell n (namely, the target cell) to implement communication.

In conclusion, in the specific embodiment 1, the base station generates the common SIB 1. The first part of the common SIB 1 corresponds to content of the SIB 1 of the cell 1, and the first part further includes content that is in the SIB 1 of the cell 1 and whose value is the same as a value of a parameter in a SIB 1 of another cell managed by the base station (equivalently, same content in SIBs 1 of a plurality of cells is combined). The base station sends the common SIB 1. Correspondingly, after receiving the common SIB 1, the UE may determine, based on the common SIB 1, the SIBs 1 of the plurality of cells managed by the base station. Further, the UE may flexibly access one of the cells to implement effective communication. In addition, the base station generates the common SIB 1, so that the UE obtains the SIB 1 of the target cell, thereby reducing total SIB 1 overheads.

A communication apparatus provided in the embodiments of this application is described below.

Based on a same technical concept, an embodiment of this application provides a communication apparatus. The apparatus may be used in the first network device in the method of this application. The communication apparatus includes modules or units that one-to-one correspond to the methods/operations/steps/actions described for the first network device in the foregoing embodiments. The module or unit may be implemented by a hardware circuit, software, or a combination of a hardware circuit and software. The communication apparatus has a structure shown in FIG. 7.

As shown in FIG. 7, the communication apparatus 700 may include a processing unit 701, and the processing unit 701 is equivalent to a processing module.

Optionally, the communication apparatus 700 further includes a transceiver unit 702. The transceiver unit 702 may implement a corresponding communication function. The transceiver unit 702 may include a receiving unit and/or a sending unit. The receiving unit may be configured to receive information, data, and/or the like, and the sending unit may be configured to send information and/or data. The transceiver unit may also be referred to as a communication interface or a transceiver module.

Optionally, the communication apparatus 700 may further include a storage unit 703. The storage unit 703 is equivalent to a storage module, and may be configured to store instructions and/or data. The processing unit 701 may read the instructions and/or the data in the storage module, to enable the communication apparatus to implement the foregoing method embodiments.

The communication apparatus 700 may be configured to perform an action performed by the first network device in the foregoing method embodiments. The communication apparatus 700 may be a first network device or a component that may be configured in the first network device. The transceiver unit 702 is configured to perform a sending related operation on a first network device side in the foregoing method embodiments, and the processing unit 701 is configured to perform a processing related operation on the first network device side in the foregoing method embodiments.

Optionally, the transceiver unit 702 may include a sending unit and a receiving unit. The sending unit is configured to perform a sending operation in the foregoing method embodiments. The receiving unit is configured to perform a receiving operation in the foregoing method embodiments.

It should be noted that the communication apparatus 700 may include the sending unit, but does not include the receiving unit. Alternatively, the communication apparatus 700 may include the receiving unit, but does not include the sending unit. This may depend on whether the foregoing solution performed by the communication apparatus 700 includes a sending action and a receiving action.

In an example, the communication apparatus 700 is configured to perform an action performed by the first network device in the embodiment shown in FIG. 4.

For example, the processing unit 701 is configured to generate common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The transceiver unit 702 is configured to send the common system information.

It should be understood that a specific process in which the units perform the foregoing corresponding processes has been described in detail in the foregoing method embodiments. For brevity, details are not described herein again.

The processing unit 701 in the foregoing embodiment may be implemented by at least one processor or processor related circuit. The transceiver unit 702 may be implemented by a transceiver or a transceiver related circuit. The storage unit may be implemented by at least one memory.

Based on a same technical concept, an embodiment of this application provides a communication apparatus. The apparatus may be used in the terminal device in the method of this application. The communication apparatus includes modules or units that one-to-one correspond to the methods/operations/steps/actions described for the terminal device in the foregoing embodiments. The module or unit may be implemented by a hardware circuit, software, or a combination of a hardware circuit and software. The communication apparatus may also have a structure shown in FIG. 7.

As shown in FIG. 7, the communication apparatus 700 may include a processing unit 701, and the processing unit 701 is equivalent to a processing module.

Optionally, the communication apparatus 700 further includes a transceiver unit 702. The transceiver unit 702 may implement a corresponding communication function. The transceiver unit 702 may include a receiving unit and/or a sending unit. The receiving unit may be configured to receive information, data, and/or the like, and the sending unit may be configured to send information and/or data. The transceiver unit 702 may also be referred to as a communication interface or a transceiver module.

Optionally, the communication apparatus 700 may further include a storage unit 703. The storage unit 703 is equivalent to a storage module, and may be configured to store instructions and/or data. The processing unit 701 may read the instructions and/or the data in the storage module, to enable the communication apparatus to implement the foregoing method embodiments.

The communication apparatus 700 may be configured to perform an action performed by the terminal device in the foregoing method embodiments. The communication apparatus 700 may be a terminal device or a component that may be configured in the terminal device. The transceiver unit 702 is configured to perform a receiving related operation on a terminal device side in the foregoing method embodiments, and the processing unit 701 is configured to perform a processing related operation on the terminal device side in the foregoing method embodiments.

Optionally, the transceiver unit 702 may include a sending unit and a receiving unit. The sending unit is configured to perform a sending operation of the terminal device in the foregoing method embodiments. The receiving module is configured to perform a receiving operation of the terminal device in the foregoing method embodiments.

It should be noted that the communication apparatus 700 may include the sending unit, but does not include the receiving unit. Alternatively, the communication apparatus 700 may include the receiving unit, but does not include the sending unit. This may depend on whether the foregoing solution performed by the communication apparatus 700 includes a sending action and a receiving action.

In an example, the communication apparatus 700 is configured to perform an action performed by the terminal device in the embodiment shown in FIG. 4.

For example, the transceiver unit 702 is configured to receive common system information from a first network device. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The processing unit 701 is configured to determine system information of a target cell based on the common system information.

It should be understood that a specific process in which the units perform the foregoing corresponding processes has been described in detail in the foregoing method embodiments. For brevity, details are not described herein again.

The processing unit 701 in the foregoing embodiment may be implemented by at least one processor or processor related circuit. The transceiver unit 702 may be implemented by a transceiver or a transceiver related circuit. The storage unit may be implemented by at least one memory.

This application further provides a communication apparatus. The communication apparatus may be a first network device, or a processor or a chip of the first network device. The communication apparatus may be configured to perform an operation performed by the first network device in the foregoing method embodiments. Alternatively, the communication apparatus may be a terminal device, or a processor or a chip of the terminal device. The communication apparatus may be configured to perform an operation performed by the terminal device in the foregoing method embodiments.

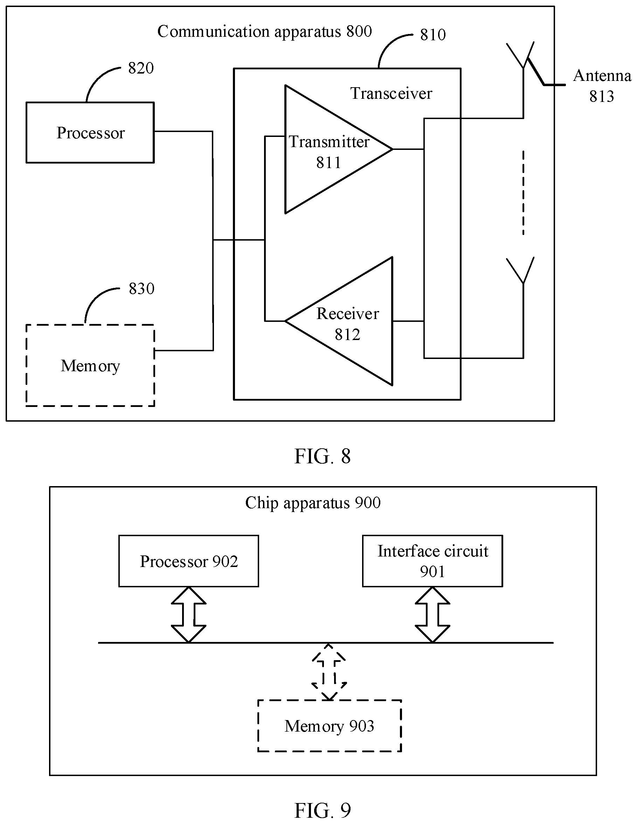

FIG. 8 is a simplified diagram of a structure of a communication apparatus. As shown in FIG. 8, the communication apparatus 800 includes a processor 820. Optionally, the communication apparatus further includes a transceiver 810 and a memory 830.

The processor 820 may also be referred to as a processing unit, a processing board, a processing module, a processing apparatus, or the like.

The transceiver 810 may also be referred to as a transceiver module, a transceiver unit, a transceiver, a transceiver circuit, a transceiver apparatus, a communication interface, or the like. Optionally, a component that is in the transceiver 810 and that is configured to implement a sending function may be considered as a sending unit or a sending module, and a component that is in the transceiver 810 and that is configured to implement a receiving function may be considered as a receiving unit or a receiving module. In other words, the transceiver 810 may include a transmitter 811, a receiver 812, a radio frequency circuit (not shown in the figure), an antenna 813, and an input/output apparatus (not shown in FIG. 8). The transmitter 811 sometimes may also be referred to as a transmitter, a transmitting module, a transmitting unit, a transmitting circuit, or the like. The receiver 812 sometimes may also be referred to as a receiver, a receiving module, a receiving unit, a receiving circuit, or the like. The radio frequency circuit is mainly configured to: perform conversion between a baseband signal and a radio frequency signal, and process the radio frequency signal. The antenna 813 is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of communication apparatuses may not have an input/output apparatus.

The memory 830 is mainly configured to store a software program and data.

When needing to send data, after performing baseband processing on the to-be-sent data, the processor 820 outputs a baseband signal to the radio frequency circuit; and the radio frequency circuit performs radio frequency processing on the baseband signal and then sends a radio frequency signal to the outside in a form of an electromagnetic wave through the antenna. When data is to be sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data. For ease of description, FIG. 8 shows only one memory, one processor, and one transceiver. In an actual communication apparatus product, there may be one or more processors and one or more memories. The memory may also be referred to as a storage medium, a storage device, or the like. The memory may be independent of the processor, or may be integrated with the processor. This is not limited in this embodiment of this application.

Optionally, the transceiver 810 and the memory 830 may include one or more boards. Each board may include one or more processors and one or more memories. The processor is configured to read and execute a program in the memory to implement a baseband processing function and control over the communication apparatus. If there are a plurality of boards, the boards may be connected to each other, to enhance a processing capability. In an optional implementation, a plurality of boards may alternatively share one or more processors, or share one or more memories, or share one or more processors.

When the communication apparatus 800 is used as a first network device, the transceiver 810 is mainly configured to implement receiving and sending functions of the first network device. The processor 820 is a control center of the first network device, and is configured to control the first network device to perform a processing operation on a first network device side in the foregoing method embodiments. The memory 830 is mainly configured to store computer program code and data of the first network device.

In this embodiment of this application, the transceiver having the receiving and sending functions may be considered as a transceiver unit (a transceiver module) of the first network device, and the processor having a processing function may be considered as a processing unit (a processing module) of the first network device.

In an implementation, the processor 820 is configured to perform a processing action on the first network device side in the embodiment shown in FIG. 4, and the transceiver 810 is configured to perform the receiving and sending actions on the first network device side in FIG. 4. For example, the processor 820 is configured to perform the processing operation of S401 in the embodiment shown in FIG. 4, and may generate common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The transceiver 810 is configured to perform S402 in the embodiment shown in FIG. 4, and may send the common system information.

It should be understood that FIG. 8 is merely an example instead of a limitation, and the network device including the processor, the memory, and the transceiver may not depend on the structure shown in FIG. 8.

When the communication apparatus is used as a terminal device, the transceiver 810 is mainly configured to implement receiving and sending functions of the terminal device. The processor 820 is a control center of the terminal device, and is configured to control the terminal device to perform a processing operation on a terminal device side in the foregoing method embodiments. The memory 830 is mainly configured to store computer program code and data of the terminal device.

In an implementation, the transceiver 810 is configured to perform receiving and sending related processes performed by the terminal device in the embodiment shown in FIG. 4. For example, the transceiver 810 is configured to perform S402 in the embodiment shown in FIG. 4, and may receive common system information. The common system information includes a plurality of information elements, the plurality of information elements include a first information element and a second information element, the first information element includes values of a plurality of parameters in system information of a first cell, and the second information element includes a value of a first parameter in system information of a second cell. A value of a second parameter in the system information of the second cell is the same as a value of a second parameter in the system information of the first cell, and the first parameter and the second parameter constitute the plurality of parameters; and a value of a physical cell identifier included in the first parameter in the first information element is a physical cell identifier of the first cell, and a value of a physical cell identifier included in the first parameter in the second information element is a physical cell identifier of the second cell. The processor 820 is configured to perform a processing related process performed by the terminal device in the embodiment shown in FIG. 4. For example, the processor 820 is configured to perform S403 in the embodiment shown in FIG. 4, and may determine system information of a target cell based on the common system information.

It should be understood that FIG. 8 is merely an example instead of a limitation, and the terminal device including the processor, the memory, and the transceiver may not depend on the structure shown in FIG. 8.

When the network device (or the terminal device) is a chip, FIG. 9 is a simplified diagram of a structure of a chip apparatus. The chip apparatus 900 includes an interface circuit 901 and a processor 902. The interface circuit 901 and the processor 902 are coupled to each other. It may be understood that the interface circuit 901 may be a transceiver or an input/output interface, and the processor 902 may be a processing module, a microprocessor, or an integrated circuit integrated on the chip. A sending operation of the network device (or the terminal device) in the foregoing method embodiments may be understood as output of the chip apparatus, and a receiving operation of the network device (or the terminal device) in the foregoing method embodiments may be understood as input of the chip apparatus.

Optionally, the chip apparatus 900 may further include a memory 903, configured to store instructions to be executed by the processor 902, store input data required by the processor 902 to run the instructions, or store data generated after the processor 902 runs the instructions. Optionally, the memory 903 and the processor 902 may be integrated together.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is enabled to implement the method performed by the network device or the terminal device in the foregoing method embodiments.

An embodiment of this application further provides a computer program product including instructions. When the instructions are executed by a computer, the computer is enabled to implement the method performed by the network device or the terminal device in the foregoing method embodiments.

An embodiment of this application further provides a communication system. The communication system includes the network device and the terminal device in the foregoing embodiments.

An embodiment of this application further provides a chip apparatus, including a processor. The processor is configured to invoke a computer program or computer instructions stored in a memory, so that the processor performs the communication method in the embodiment shown in FIG. 4.

In a possible implementation, input of the chip apparatus corresponds to a receiving operation in the embodiment shown in FIG. 4, and output of the chip apparatus corresponds to a sending operation in the embodiment shown in FIG. 4.

Optionally, the processor is coupled to the memory through an interface.

Optionally, the chip apparatus further includes the memory. The memory stores the computer program or the computer instructions.

The processor mentioned anywhere above may be a general central processing unit, a microprocessor, an application-specific integrated circuit (application-specific integrated circuit, ASIC), or one or more integrated circuits configured to control program execution of the communication method in the embodiment shown in FIG. 4. The memory mentioned anywhere above may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, reference may be made to the corresponding method embodiments provided above. Details are not described herein again.

In this application, the network device or the terminal device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into modules in the embodiments of this application is an example, is merely logical function division, and may be other division in an actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

A person skilled in the art should understand that the embodiments of this application may be provided as a method, a system, or a computer program product. Therefore, this application can use a form of hardware only embodiments, software only embodiments, or embodiments with a combination of software and hardware. In addition, this application can use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer-readable memory that can instruct the computer or the another programmable data processing device to work in a specific way, so that the instructions stored in the computer-readable memory generate an artifact that includes an instruction apparatus. The instruction apparatus implements a specific function in one or more processes in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of protection of this application. Therefore, this application is intended to cover these modifications and variations of this application provided that they fall within the scope of protection of the claims of this application and their equivalent technologies.

**Claims**

1. A communication method, comprising:

    generating, by a first network device, common system information, wherein the common system information comprises a plurality of information elements, the plurality of information elements comprise a first information element and a second information element, the first information element comprises values of a plurality of parameters in system information of a first cell, and the second information element comprises a value of a first parameter in system information of a second cell, wherein a value of a second parameter in the system information of the second cell is the same as a value of a second parameter in the system information of the first cell, and the first parameter and the second parameter constitute the plurality of parameters; and a value of a physical cell identifier comprised in the first parameter in the first information element is a physical cell identifier of the first cell, and a value of a physical cell identifier comprised in the first parameter in the second information element is a physical cell identifier of the second cell; and
    sending, by the first network device, the common system information.

2. The method according to claim 1, wherein the method further comprises:

sending, by the first network device, first information, wherein the first information indicates a common physical cell identifier; and
the sending, by the first network device, the common system information comprises:

determining, by the first network device, a scrambling sequence based on the common physical cell identifier;
scrambling, by the first network device, the common system information by using the scrambling sequence; and
sending, by the first network device, the scrambled common system information.

3. The method according to claim 2, wherein the first information comprises the common physical cell identifier or a difference between the common physical cell identifier and a physical cell identifier of a cell managed by the first network device.

4. The method according to any one of claims 1 to 3, wherein the method further comprises:
sending, by the first network device, a first synchronization signal block, wherein the first synchronization signal block comprises the physical cell identifier of the cell managed by the first network device.

5. A communication method, comprising:

receiving, by a terminal device, common system information from a first network device, wherein the common system information comprises a plurality of information elements, the plurality of information elements comprise a first information element and a second information element, the first information element comprises values of a plurality of parameters in system information of a first cell, and the second information element comprises a value of a first parameter in system information of a second cell, wherein a value of a second parameter in the system information of the second cell is the same as a value of a second parameter in the system information of the first cell, and the first parameter and the second parameter constitute the plurality of parameters; and a value of a physical cell identifier comprised in the first parameter in the first information element is a physical cell identifier of the first cell, and a value of a physical cell identifier comprised in the first parameter in the second information element is a physical cell identifier of the second cell; and
determining, by the terminal device, system information of a target cell based on the common system information.

6. The method according to claim 5, wherein the method further comprises:

receiving, by the terminal device, first information from the first network device, wherein the first information indicates a common physical cell identifier; and
the receiving, by a terminal device, common system information from a first network device comprises:

receiving, by the terminal device, a signal from the first network device;
determining, by the terminal device, a descrambling sequence based on the common physical cell identifier indicated by the first information; and
descrambling, by the terminal device, the signal by using the descrambling sequence, to obtain the common system information.

7. The method according to claim 6, wherein the first information comprises the common physical cell identifier or a difference between the common physical cell identifier and a physical cell identifier of a cell managed by the first network device; and
when the first information comprises the difference between the common physical cell identifier and the physical cell identifier of the cell managed by the first network device, before the determining, by the terminal device, a descrambling sequence based on the common physical cell identifier indicated by the first information, the method further comprises:

receiving, by the terminal device, a first synchronization signal block from the first network device, wherein the first synchronization signal block comprises the physical cell identifier of the cell managed by the first network device; and
determining, by the terminal device, the common physical cell identifier based on the physical cell identifier of the cell managed by the first network device and the difference, in the first information, between the common physical cell identifier and the physical cell identifier of the cell managed by the first network device.

8. The method according to claim 7, wherein the determining, by the terminal device, system information of a target cell based on the common system information comprises:

receiving, by the terminal device, a second synchronization signal block from a second network device, wherein the second synchronization signal block comprises a physical cell identifier of the target cell managed by the second network device; and
determining, by the terminal device, the system information of the target cell from the common system information based on the physical cell identifier of the target cell.

9. The method according to claim 8, wherein the determining, by the terminal device, the system information of the target cell from the common system information based on the physical cell identifier of the target cell comprises:

when the physical cell identifier of the target cell is the physical cell identifier of the first cell, obtaining, by the terminal device, the first information element comprising the physical cell identifier of the first cell from the common system information; and using, by the terminal device as the system information of the target cell, the values of the plurality of parameters comprised in the first information element; or
when the physical cell identifier of the target cell is the physical cell identifier of the second cell, obtaining, by the terminal device, the second information element comprising the physical cell identifier of the second cell from the common system information; obtaining the values of the plurality of parameters in the first information element from the common system information; replacing, by the terminal device, a value of the first parameter in the plurality of parameters with the value of the first parameter in the second information element, to obtain updated values of the plurality of parameters; and using, by the terminal device, the updated values of the plurality of parameters as the system information of the target cell.

10. A communication apparatus, used in a first network device, and comprising a transceiver unit and a processing unit, wherein

the processing unit is configured to generate common system information, wherein the common system information comprises a plurality of information elements, the plurality of information elements comprise a first information element and a second information element, the first information element comprises values of a plurality of parameters in system information of a first cell, and the second information element comprises a value of a first parameter in system information of a second cell, wherein a value of a second parameter in the system information of the second cell is the same as a value of a second parameter in the system information of the first cell, and the first parameter and the second parameter constitute the plurality of parameters; and a value of a physical cell identifier comprised in the first parameter in the first information element is a physical cell identifier of the first cell, and a value of a physical cell identifier comprised in the first parameter in the second information element is a physical cell identifier of the second cell; and
the transceiver unit is configured to send the common system information.

11. The apparatus according to claim 10, wherein the transceiver unit is further configured to send first information, wherein the first information indicates a common physical cell identifier; and
when sending the common system information, the transceiver unit is specifically configured to:

determine a scrambling sequence based on the common physical cell identifier by using the processing unit; scramble the common system information by using the processing unit and the scrambling sequence; and send the scrambled common system information.

12. The apparatus according to claim 11, wherein the first information comprises the common physical cell identifier or a difference between the common physical cell identifier and a physical cell identifier of a cell managed by the first network device.

13. The apparatus according to any one of claims 10 to 12, wherein the transceiver unit is further configured to:
send a first synchronization signal block, wherein the first synchronization signal block comprises the physical cell identifier of the cell managed by the first network device.

14. A communication apparatus, used in a terminal device, and comprising a transceiver unit and a processing unit, wherein

the transceiver unit is configured to receive common system information from a first network device, wherein the common system information comprises a plurality of information elements, the plurality of information elements comprise a first information element and a second information element, the first information element comprises values of a plurality of parameters in system information of a first cell, and the second information element comprises a value of a first parameter in system information of a second cell, wherein a value of a second parameter in the system information of the second cell is the same as a value of a second parameter in the system information of the first cell, and the first parameter and the second parameter constitute the plurality of parameters; and a value of a physical cell identifier comprised in the first parameter in the first information element is a physical cell identifier of the first cell, and a value of a physical cell identifier comprised in the first parameter in the second information element is a physical cell identifier of the second cell; and

the processing unit is configured to determine system information of a target cell based on the common system information.

15. The apparatus according to claim 14, wherein the transceiver unit is further configured to:

receive first information from the first network device, wherein the first information indicates a common physical cell identifier; and
when receiving the common system information from the first network device, the transceiver unit is specifically configured to:

receive a signal from the first network device;
determine a descrambling sequence based on the common physical cell identifier indicated by the first information and by using the processing unit; and
descramble the signal by using the processing unit and the descrambling sequence, to obtain the common system information.

16. The apparatus according to claim 15, wherein the first information comprises the common physical cell identifier or a difference between the common physical cell identifier and a physical cell identifier of a cell managed by the first network device; and

when the first information comprises the difference between the common physical cell identifier and the physical cell identifier of the cell managed by the first network device, the processing unit is further configured to: before the descrambling sequence is determined based on the common physical cell identifier indicated by the first information, receive a first synchronization signal block from the first network device through the transceiver unit, wherein the first synchronization signal block comprises the physical cell identifier of the cell managed by the first network device; and determine the common physical cell identifier based on the physical cell identifier of the cell managed by the first network device and the difference, in the first information, between the common physical cell identifier and the physical cell identifier of the cell managed by the first network device.

17. The apparatus according to claim 16, wherein when determining the system information of the target cell based on the common system information, the processing unit is specifically configured to:

receive a second synchronization signal block from a second network device through the transceiver unit, wherein the second synchronization signal block comprises a physical cell identifier of the target cell managed by the second network device; and
determine the system information of the target cell from the common system information based on the physical cell identifier of the target cell.

18. The apparatus according to claim 17, wherein when determining the system information of the target cell from the common system information based on the physical cell identifier of the target cell, the processing unit is specifically configured to:

when the physical cell identifier of the target cell is the physical cell identifier of the first cell, obtain the first information element comprising the physical cell identifier of the first cell from the common system information; and use, as the system information of the target cell, the values of the plurality of parameters comprised in the first information element; or
when the physical cell identifier of the target cell is the physical cell identifier of the second cell, obtain the second information element comprising the physical cell identifier of the second cell from the common system information; obtain the values of the plurality of parameters in the first information element from the common system information; replace a value of the first parameter in the plurality of parameters with the value of the first parameter in the second information element, to obtain updated values of the plurality of parameters; and use the updated values of the plurality of parameters as the system information of the target cell.

19. A communication apparatus, comprising a processor, wherein the processor is configured to read a program from a memory and run the program, to implement the method according to any one of claims 1 to 4, or implement the method according to any one of claims 5 to 9.

20. A communication system, comprising a first network device configured to perform the method according to any one of claims 1 to 4 and a terminal device configured to perform the method according to any one of claims 5 to 9.

21. A computer program product, comprising a computer program, wherein when the computer program is executed by a communication apparatus, the method according to any one of claims 1 to 9 is implemented.

22. A computer-readable storage medium, wherein the storage medium stores a computer-readable program or instructions; and when the computer program or the instructions are executed by a communication apparatus, the method according to any one of claims 1 to 9 is implemented.

FIG. 1

FIG. 2

FIG. 3A

FIG. 3B

| Step 0: Generate a common SIB 1 sequence | → | Step 1: Perform transport block CRC check | → | Step 2: Select a low density parity check code base graph | → | Step 3: Perform CRC check processing on a code block | → | Step 4: Perform channel encoding processing | → | Step 5: Perform rate matching |

| Step 6: Perform codebook concatenation | → | Step 7: Perform scrambling | → | Step 8: Perform modulation processing | → | Step 9: Perform resource mapping | Send → |

FIG. 3C

Initial value

$x_0(n)$

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 |

30 29 28 27 26 25 24 23 22 21 20 19 18 17 16 15 14 13 12 11 10 9 8 7 6 5 4 3 2 1 0

Shift of $N_c$ bits
$N_c=1600$

$x_0(n+N_c)$

Initial value

$x_1(n)$

| | | | | | | | | | | | | | | 0 | 0 | 0 | 0 | | | | | | | | | | | | | |

30 29 28 27 26 25 24 23 22 21 20 19 18 17 16 15 14 13 12 11 10 9 8 7 6 5 4 3 2 1 0

RNTI          q          PCI

Shift of $N_c$ bits
$N_c=1600$

$x_1(n+N_c)$

Scrambling sequence

FIG. 3D

EP 4 546 916 A1

First network device | Terminal device

S401: Generate common system information

S402: Common system information

S403: Determine system information of a target cell based on the common system information

FIG. 4

| Base station | UE |
|---|---|

S501: Generate a synchronization signal block SSB

S502: Broadcast the SSB

S503: Generate DCI, where the DCI indicates scheduling information of a PDSCH of a common SIB 1

S504: Perform physical-layer processing on the DCI to generate a PDCCH

S505: Broadcast the PDCCH at a first time-frequency location

S506: Perform physical-layer inverse processing on the PDCCH to obtain the DCI

S507: Generate the common SIB 1, where the common SIB 1 includes SIBs 1 of N cells (namely, a cell 1 to a cell N)

S508: Perform physical-layer processing on the common SIB 1 to generate the PDSCH

S509: Broadcast the PDSCH at a second time-frequency location

S510: Perform physical-layer inverse processing on the PDSCH to obtain the common SIB 1

S511: Determine a SIB 1 of a target cell based on the common SIB 1

S512: Access the target cell based on the SIB 1 of the target cell to implement communication

FIG. 5

Common SIB 1

| SIB 1 information of a cell 1 | Partial content of a cell 2 | ... | Partial content of a cell N |
|---|---|---|---|

First part

Other parts (N−1 parts)

FIG. 6A

Common SIB 1

| PCI of a cell 1<br>cellSelectionInfo<br>**cellAccessRelatedInfo**<br>connEstFailureControl<br>Sl-SchedulingInfo<br>**servingCellconfigCommon**<br>Ims-EmergencySupport<br>eCallOverIMS-Support<br>Ue-TimerAndConstants<br>Uac-BarringInfo | PCI of a cell 2<br>cellAccessRelatedInfo<br>servingCellConfigCommon |
|---|---|

First part

Second part

FIG. 6B

Communication apparatus 700

702
701
703

| Transceiver unit | Processing unit | Storage unit |
|---|---|---|

FIG. 7

Communication apparatus 800

820

Processor

Transceiver

810

Transmitter
811

Antenna
813

830

Memory

Receiver
812

**FIG. 8**

Chip apparatus 900

Processor 902

Interface circuit
901

Memory 903

**FIG. 9**

## INTERNATIONAL SEARCH REPORT

| International application No. |
|---|
| **PCT/CN2023/094157** |

**A.    CLASSIFICATION OF SUBJECT MATTER**

H04W 72/04(2023.01)i

According to International Patent Classification (IPC) or to both national classification and IPC

**B.    FIELDS SEARCHED**

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

VEN, DWPI, VCN, EXTXT, 3GPP, CNTXT, ENTXTC: 第一, 调整, 多, 改变, 公共, 归并, 合并, 几, 减少, 减小, 频域, 若干, 时频, 时域, 物理小区标识, 系统消息块, 小区, 资源, cell, common, dynamic, PCI, RB, SIB, SIB1, UE, group, station, system, information

**C.    DOCUMENTS CONSIDERED TO BE RELEVANT**

| Category* | Citation of document, with indication, where appropriate, of the relevant passages | Relevant to claim No. |
|---|---|---|
| X | US 2016165638 A1 (QUALCOMM INC.) 09 June 2016 (2016-06-09) description, paragraphs [0065]-[0075], and figures 4-7 | 1-22 |
| X | US 2020084700 A1 (SONY CORP.) 12 March 2020 (2020-03-12) description, paragraphs [0123]-[0136], and figures 1-5 | 1-22 |
| X | PANASONIC. "Relation among NR-PBCH, SIBs and Subcells" *3GPP TSG RAN WG1 Meeting #88bis R1-1705170,* 07 April 2017 (2017-04-07), chapter 2 | 1-22 |
| A | CN 108063654 A (HUAWEI TECHNOLOGIES CO., LTD.) 22 May 2018 (2018-05-22) entire document | 1-22 |
| A | WO 2018203633 A1 (LG ELECTRONICS INC.) 08 November 2018 (2018-11-08) entire document | 1-22 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 August 2023** | **17 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/094157**

| Patent document cited in search report | | | Publication date (day/month/year) | Patent family member(s) | | | Publication date (day/month/year) |
|---|---|---|---|---|---|---|---|
| US | 2016165638 | A1 | 09 June 2016 | KR | 20170092548 | A | 11 August 2017 |
| | | | | WO | 2016094537 | A2 | 16 June 2016 |
| | | | | US | 2019150115 | A1 | 16 May 2019 |
| | | | | BR | 112017012124 | A2 | 02 January 2018 |
| | | | | EP | 3231229 | A2 | 18 October 2017 |
| | | | | JP | 2017537550 | A | 14 December 2017 |
| | | | | CN | 107005918 | A | 01 August 2017 |
| | | | | IN | 201747014223 | A | 28 April 2017 |
| US | 2020084700 | A1 | 12 March 2020 | WO | 2018115386 | A1 | 28 June 2018 |
| | | | | KR | 20190098966 | A | 23 August 2019 |
| | | | | EP | 3560243 | A1 | 30 October 2019 |
| | | | | CN | 110100482 | A | 06 August 2019 |
| CN | 108063654 | A | 22 May 2018 | WO | 2014043851 | A1 | 27 March 2014 |
| | | | | CN | 108063655 | A | 22 May 2018 |
| | | | | CN | 107809307 | A | 16 March 2018 |
| | | | | CN | 104025489 | A | 03 September 2014 |
| WO | 2018203633 | A1 | 08 November 2018 | US | 2022361087 | A1 | 10 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210897038